(19) Europäisches Patentamt
European Patent Office
Office européen des brevets

(11) **EP 1 638 005 A1**

(12) **EUROPEAN PATENT APPLICATION**
published in accordance with Art. 158(3) EPC

(43) Date of publication:
**22.03.2006 Bulletin 2006/12**

(51) Int Cl.:
**G06F 12/14** (1985.01)    **G06F 15/00** (1968.09)
**G06Q 10/00** (0000.00)    **H04L 9/08** (1990.01)

(21) Application number: **04745779.1**

(22) Date of filing: **04.06.2004**

(86) International application number:
**PCT/JP2004/008179**

(87) International publication number:
**WO 2005/001698 (06.01.2005 Gazette 2005/01)**

(84) Designated Contracting States:
**DE FR GB**

(30) Priority: **25.06.2003 JP 2003181710**

(71) Applicant: **SONY CORPORATION**
**Tokyo 141-0001 (JP)**

(72) Inventors:
• **Kim, Sung Yoon,**
**Sony Corporation**
**Shinagawa-ku, Tokyo 141-0001 (JP)**

• **Tsuchiya, Kenichi,**
**Sony Corporation**
**Shinagawa-ku, Tokyo 141-0001 (JP)**

(74) Representative: **Körber, Martin Hans**
**Mitscherlich & Partner**
**Patentanwälte**
**Sonnenstrasse 33**
**80331 München (DE)**

(54) **INFORMATION SERVER, INFORMATION DEVICE, INFORMATION PROCESSING SYSTEM, INFORMATION PROCESSING METHOD, AND INFORMATION PROCESSING PROGRAM**

(57)    An information device, an information device, an information server, an information processing system, an information processing method and an information processing program which can prevent an illegal extension of an expiration date while allowing the same user to redownload a license are provided. An information server (4) includes a license storage means for storing a relative time license, a time obtaining means for obtaining the present time, a license generation means for generating an absolute time license on the basis of the relative time license and the present time before the first transmission of a license to an information device, and a transmission means for transmitting the generated absolute time license to the information device. Even in the case where a license for contents is repeatedly downloaded, irrespective of the time of downloading, the expiration date of the contents can be fixed.

FIG. 1

## Description

### TECHNICAL FIELD

The present invention relates to an information device having a function of utilizing contents, an information server issuing a license which enables the utilization of contents, an information processing system including such an information device and such an information server, an information processing method applicable to such an information processing system, and a program applicable to such an information device and such an information server.

### BACKGROUND ART

In recent years, a contents exchange system that while a user provides another user with contents such as music data owned by the user via the Internet through the use of a PC (Personal Computer), another user provides the user with contents not owned by the user has emerged.

In the system of this kind, theory holds that if contents exist, all other users can utilize the contents, thereby a large number of users will not purchase the contents. As a result, the contents as a copyright work do not sell well, so the copyright holder of the contents will lose an opportunity to receive a royalty that the copyright holder is supposed to receive every time the contents are sold. Therefore, it is socially requested to prevent unauthorized copying and utilization of contents which are not licensed by copyright holders without interfering with the distribution of the contents.

In order to respond such a request, for example, as described in Japanese Unexamined Patent Application Publication No. 2002-359616, a technique called OpenMG X (trademark) in which while contents can be freely distributed, the contents can be utilized by only authorized users has been proposed.

The technique is as described below. A client receives encrypted contents from a contents server. In the header of the contents, license identification information for identifying a license necessary to utilize the contents is included. The client requests the license from the license server on the basis of the license identification information. When the license server receives the request for the license, the license server executes a charging process, then transmits an appropriate license to the client. The client can decode and replay the contents on condition that the client holds the license. In this technique, while the contents can be freely distributed, only authorized users can utilize the contents, so while preventing the unauthorized utilization of contents, the distribution of contents can be promoted.

According to explosive diffusion of the Internet and rapid deployment of broadband services in recent years, it is expected that not only PCs but also electronic devices for consumer electronics called CE (Consumer Electronics) devices will be directly connected to a network. Moreover, it is expected that one user will own a plurality of PCs or CE devices capable of accessing the Internet.

However, when a plurality of information devices owned by an individual are connected to a network, a conventional model that contents or licenses are controlled by only one device which downloads the contents or the licenses is not user-friendly. For example, in the case where a user uses his home PC to purchase contents through a network, even if the user wants to utilize the contents in a portable device outside the house, he has no choice but to purchase the contents again.

The applicant of the present invention has proposed a novel system in Japanese Patent Application No. 2003-163968 that in the case where a user obtains contents which are protected so as to be playable only by a user obtaining the contents in a legitimate manner through the use of one of a plurality of information devices owned by the user, the contents can be utilized in any other information devices owned by the user through grouping and controlling the plurality of information devices by a license server.

There is a relative time license as a license which enables the utilization of contents for a predetermined period of time. An example of the license is a license which enables the utilization of corresponding contents for one month from the time of downloading the license.

However, in the case where the relative time license is applied to the above-described system, it can be considered that an unfavorable situation for providers will arise. For example, in a situation in which a user can download such a relative time license again without charging after a lapse of a predetermined period of time, as the time specified in the license is a relative time, the user can utilize contents for a longer period of time than a period of time specified in the license. It can be assumed that the contents can be utilized on a semipermanent basis through repeatedly downloading the license.

### DISCLOSURE OF THE INVENTION

In view of the foregoing, it is an object of the invention to provide an information device, an information server, an information processing system, an information processing method and an information processing program capable of preventing an illegal extension of a period of use, while allowing the same user to redownload a license.

An information server according to the invention includes: a license storage means for storing a relative time license including a contents utilization condition described with a relative time; a time obtaining means for obtaining the present time; a license generation means for generating an absolute time license including a contents utilization condition described with an absolute time on the basis of both of the relative time license stored in the license storage means and the present time obtained by the time obtaining means before the first transmission of a license to an information device; and a transmission means for transmitting the generated absolute time license to the information device. In the information server, the absolute time license is generated on the basis of the relative time license and the present time, and the absolute time license is transmitted to the information device.

The information server according to the invention may further include: a group management means for associating grouped device identification information, key information for contents decryption, device identification information for identifying each information device in the device group and one or a plurality of kinds of license identification information assigned for the device group with a unique group identifier for the device group, the grouped device identification information used for grouping and identifying one or a plurality of information devices in a device group to which an information device intending to utilize contents belongs, and registering these information, and providing the grouped device identification information and the key information to an information devices in the device group in response to a request from the information device in the device group; and a license providing means for judging an information device which requests a license on the basis of information controlled by the group management means in the case where the information device requests a license, and performing a process according to a judgment result. In this case, in the case where an information device which requests a license is an information device to which the same license has been provided before, the license providing means can determine to refuse to provide the license to the information device, and in the case where an information device which requests a license is another information device in a device group including an information device to which the license has been provided before, the license providing means can determine to grant the license to the information device requesting the license. Alternatively, in the case where an information device requesting a license is an information device belonging to a device group controlled by the group management means, the license providing means may determine to grant the license to the information device requesting the license irrespective of whether the license is requested for a second time or not. The group management means may further control the number of times where the same license is provided to each device group, and the license providing means may limit the number of times to a predetermined number. Moreover, the license generation means may generate the absolute time license with consideration to at least either a necessary time for transmitting a license to the information device or a time difference between the information device and the information server.

An information device according to the invention includes: a license request means for requesting the information server to provide a license; a receiving means for receiving an absolute time license transmitted from the information server in response to a first license request to the information server; and a replay means for replaying contents on the basis of the received absolute time license. In the information device, the absolute time license transmitted from the information server is received, and the contents are replayed on the basis of the absolute time license.

An information processing system according to the invention includes an information server and an information device, wherein the information server includes: a license storage means for storing a relative time license including a contents utilization condition described with a relative time; a time obtaining means for obtaining the present time; a license generation means for generating an absolute time license including a contents utilization condition described with an absolute time on the basis of both of the relative time license stored in the license storage means and the present time obtained by the time obtaining means before the first transmission of a license to an information device; and a transmission means for transmitting the generated absolute time license to the information device, and the information device includes: a license request means for requesting the information server to provide a license; a receiving means for receiving an absolute time license transmitted from the information server in response to a first license request to the information server; and a replay means for replaying contents on the basis of the received absolute time license.

A first information processing program according to the invention enables an information server to execute the steps of: storing a relative time license including a contents utilization condition described with a relative time; obtaining the present time; generating an absolute time license including a contents utilization condition described with an absolute time on the basis of both of the stored relative time license and the obtained present time before the first transmission of a license to an information device; and transmitting the generated absolute time license to the information device.

A second information processing program according to the invention enables an information device to execute the steps of: requesting an information server to provide a license; receiving an absolute time license transmitted from the information server in response to a first license request to the information server; and replaying contents on the basis of the received absolute time license.

In an information processing method according to the invention, in an information server, an absolute time license including a contents utilization condition described with an absolute time is generated on the basis of both of a relative time license including a contents utilization condition described with a relative time and the present time before the first transmission of a license to an information device, and the generated absolute time license is transmitted to the information device, and in an information device, a request to provide a license is made to the information server, the absolute time license transmitted from the information server in response to a first license request to the information server is received, and contents are replayed on the basis of the received absolute time license.

The basic meanings of terms used in the description are as below.

The "contents" means a contents portion which is digitalized, encrypted and distributed, and includes text information, image information such as a still image or a moving image, voice information or a combination thereof. For example, the contents include a combination of text information and image information such as an electronic book or electronic newspapers, application software such as a game program and the like. The method of distributing the contents is not limited, so the contents may be distributed through communications lines such as the Internet or by a recording medium such as a CD-ROM. "Utilization of contents" means to utilize information included in the contents in a usable (meaningful) form, and includes an action of replaying, viewing or executing the content.

The "information device" includes a dedicated device for utilizing contents and a general-purpose computer such as a personal computer (PC). In the following description, the information device is simply referred to as "device". The "information server" is a device for providing a license, and broadly includes an information processing device such as a workstation or a PC.

The "license" is information about a utilization right for enabling the utilization of contents, and includes utilization conditions, license identification information for identifying the license and the like. The "device group" is a group of information devices. In general, the device group corresponds to, but is not limited to, a group of a plurality of information devices owned by one user.

The "relative time license" means a license in which the contents utilization condition described with a relative time, and the "absolute time license" means a license in which the contents utilization condition described with an absolute time.

The "grouped device identification information" is device identification information in a global level (between device groups) indicating which device group each information device divided into groups belongs to. In other words, it is information provided to each information device for showing that the information device belongs to a device group. Therefore, all information devices in one device group have the same grouped device identification information. The information is treated as secured information which cannot be recognized by the user, so an ordinary user cannot transfer or copy the grouped device identification information between information devices in or outside the device group, or cannot change the grouped device identification information. In the following embodiment, a leaf ID corresponds to a specific example of the grouped device identification information.

The "group identifier" is a kind of label information provided to each device group for the sake of convenience when the device group is formed, and the group identifier can be recognized by the user. The group identifier is used when a new information device is registered in the existing device group. When a user is considered as a device group, the group identifier corresponds to a kind of user identification information. In the following embodiment, a group ID corresponds to a specific example of the group identifier.

The "device identification information" is device identification information in a local level (in a device group) which is used to identify each information device in one device group. The information may be provided to the information device at a manufacturing or purchasing stage, or may be produced by software using random numbers later. In the following embodiment, a device ID corresponds to a specific example of the device identification information.

The "key information" is a key for decryption (decoding) for decrypting encrypted contents and enabling the utilization of the contents. In the invention, a common key is provided to each device group. Therefore, all information devices in one device group have the same key. The key is treated as secured information which cannot be recognized by the user, so an ordinary user cannot transfer or copy the information between information devices in or outside the device group, or cannot change the information. In the following embodiment, a device node key DNK corresponds to a specific example of the key information.

The "user" generally means, but not limited to, a user as an individual. As long as a licenser permits, the user may mean, for example, one family making livelihood together or a social organization.

BRIEF DESCRIPTION OF THE DRAWINGS

FIG. 1 is a block diagram showing the whole configuration of an information processing system according to an embodiment of the invention;
FIG. 2 is a block diagram showing the structure of a main part of an information device and an information server;
FIG. 3 is a block diagram showing a main part of the function structure of the information device;
FIG. 4 is a block diagram showing a main part of the function structure of the information server;
FIG. 5 is an illustration showing an example of a license table in the information server;
FIG. 6 is an illustration showing an example of a group management table in the information server;
FIG. 7 is an illustration showing an example of details of a contents file, a license and user data in the information device;

FIG. 8 is an illustration showing an example of a hierarchical tree structure in a decryption key controlled by the information server;

FIGs. 9A through 9D are illustrations showing examples of details of an enabling key block and key information applied to the hierarchical tree structure shown in FIG. 8;

FIG. 10 is an illustration for describing a group registration process, a device registration process and a service registration process which are performed between the information device and the information server;

FIG. 11 is an illustration for describing a device registration process and a service registration process which are performed between the information device and the information server;

FIG. 12 is an illustration for describing a process of downloading contents and an absolute time license which is performed between the information device and the information server;

FIG. 13 is a flowchart for more specifically describing the process of downloading the absolute time license in FIG. 12; and

FIG. 14 is a flowchart for describing a modification of the process of downloading the absolute time license.

BEST MODE FOR CARRYING OUT THE INVENTION

A preferred embodiment of the invention will be described in more detail below referring to the accompanying drawings.

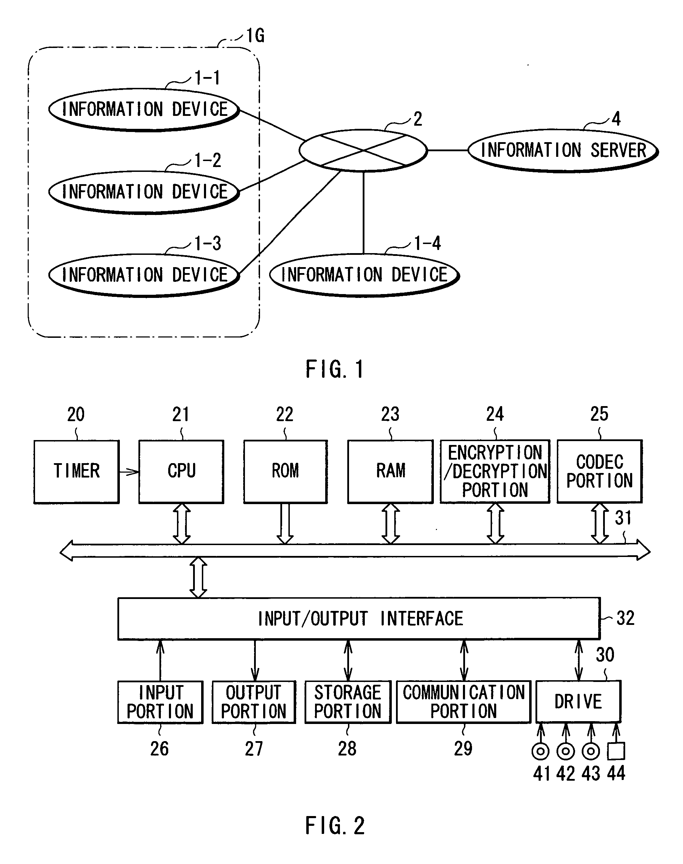

FIG. 1 shows the whole configuration of an information processing system including an information device and an information server according to an embodiment of the invention. An information processing method and an information processing program according to an embodiment of the invention are exemplified by the information processing system according to the embodiment, so they will be described together with the description of the information processing system.

The information processing system is a contents distribution/utilization system including information devices 1-1 through 1-4 as clients utilizing contents and an information server 4. The information devices 1-1 through 1-4 and the information server 4 are connected to the Internet 2. The information server 4 includes a contents providing function which provides encrypted contents to the information devices 1-1 through 1-4, a license providing function which provides a license necessary to utilize the provided contents to an information device 1, a service registration function which performs service registration (user registration) which is first necessary when the information devices 1-1 through 1-4 receive a contents distribution/utilization service, and a charging function which charges the information devices 1-1 through 1-4 when the information devices 1-1 through 1-4 receive the license. The service registration function and the license providing function can be implemented through the use of, for example, a copyright management technology called "OpenMG X".

Among the information devices 1-1 through 1-4, the information devices 1-1 through 1-3 constitute an information device group owned by a user, that is, a device group 1G. On the other hand, the information device 1-4 is owned by another user. The information devices 1-1 through 1-4 may be dedicated devices having a contents replay function or general-purpose PCs. In the following description, one information device belongs to only one device group, so one information device does not belong to a plurality of device groups.

The information devices 1-1 through 1-3 belong to the same device group 1G through a predetermined prior procedure (which will be described later), and can transfer contents and a license to one another to utilize the contents and the license. The information device 1-4 does not belong to the device group 1G, so even if the information device 1-4 receives the contents and the license from the information devices 1-1 through 1-3, the information device 1-4 cannot utilize the contents and the license. Likewise, even if the information devices 1-1 through 1-3 receive contents and a license from the information device 1-4, the information devices 1-1 through 1-3 cannot utilize the contents and the license.

In an example shown in FIG. 1, although only four information devices are shown, in reality, any given number of information devices may be connected to the Internet 2. Moreover, although the device group 1G includes three information devices, in reality, any given number of information devices may be included in the device group 1G. Further, in the drawing, although only one device group is shown, in reality, a plurality of device groups can exist.

While each of the information devices 1-1 through 1-3 included in the device group 1G is recognized as a separate hardware device by the information server 4 in a position that the physical identity of the information devices 1-1 through 1-3 is an issue, the information devices 1-1 through 1-3 are recognized as indistinguishable (characterless) information devices by the information server 4 in a position to control the validity of a contents license. The above physical identity is judged on the basis of unique device identification information (device ID) that each of the information devices 1-1 through 1-3 has.

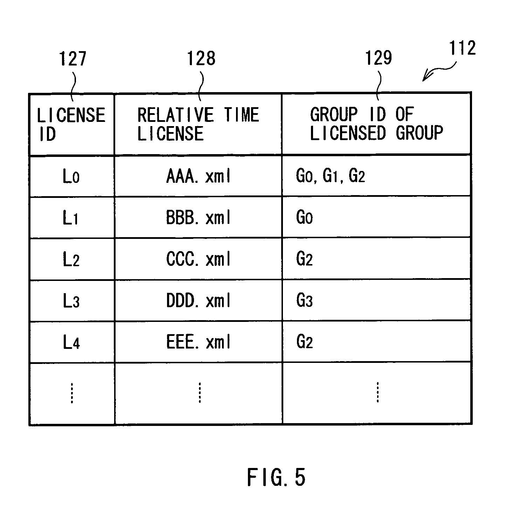

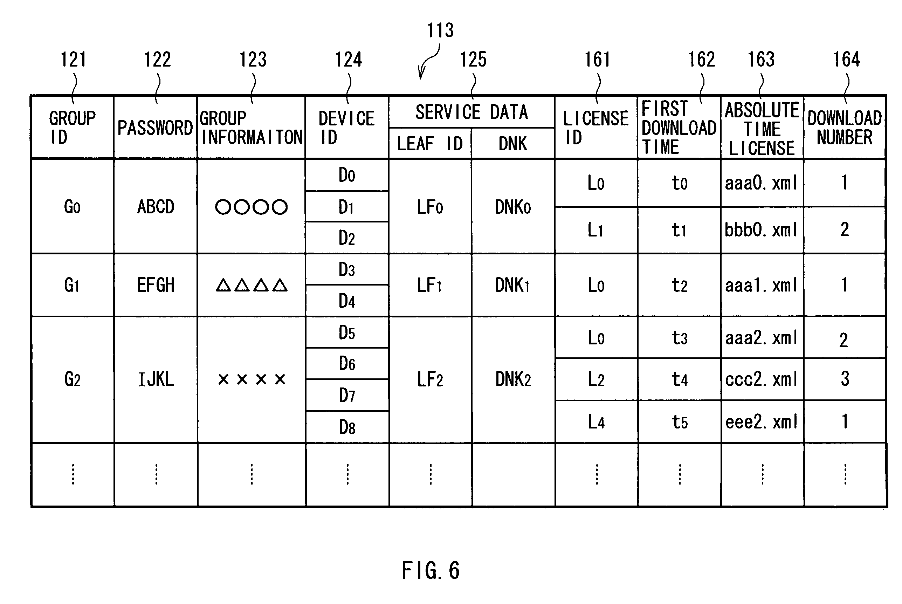

On the other hand, the above validity of the license is determined and controlled on the basis of grouped device identification information (hereinafter referred to as leaf ID) and key information DNK (Device Node Key) which are given to each of the information devices 1-1 through 1-3 from the information server 4 in advance. In other words, while each information device in one device group has a different device ID (at least a unique device ID in the device group), the information devices in the device group have the same (common) leaf ID and the same (common) key information DNK. The leaf ID and the key information DNK are treated as secured information which is invisible for (unrecognized by) a user, so the leaf ID and the key information DNK cannot be transferred or copied between the information devices both in and outside the device group. Moreover, the user cannot recognize the leaf ID, so in order to be able to perform various registration procedures that the user should do, a group identifier (group ID) which is also a user ID is given to each device group to be used in various registration procedures. The device ID, the leaf ID, the key information DNK and the group ID will be described later (refer to FIGs. 5 and 6).

FIG. 2 shows an example of the structure of the information device 1-1.

As shown in FIG. 2, the information device 1-1 includes a CPU (Central Processing Unit) 21, a ROM (Read Only Memory) 22, a RAM (Random Access Memory) 23, an encryption/decryption portion 24, a codec portion 25 and an input/output interface 32. They are connected to one another through a bus 31. An input portion 26, an output portion 27, a storage portion 28, a communication portion 29 and a drive 30 are connected to the bus 31 through the input/output interface 32.

The CPU 21 performs various processes according to a program stored in the ROM 22 or a program loaded on the RAM 23 from the storage portion 28. A timer 20 performs a timing operation to provide time information to the CPU 21. The time information is used for checking a license expiration date when contents are replayed as will be described later. In the RAM 23, data and the like which are necessary for the CPU 21 to perform various processes are stored if necessary.

The encryption/decryption portion 24 is provided to perform a process of decrypting (decoding) an encrypted content. As will be described later, in the case where the structure shown in FIG. 2 is applied to the information server 4, the encryption/decryption portion 24 has a function of encrypting a content. The codec portion 25 is provided to compress (encode) music contents in, for example, the ATRAC (Adaptive Transform Acoustic Coding) 3 format or the like to output the contents to the input/output interface 32, or to decompress (decode) compressed contents which are inputted from the input/output interface 32 and decrypted in the encryption/decryption portion 24 into replayable data.

The input portion 26 includes a keyboard, a mouse or the like, and the output portion 27 includes a display such as a CRT (cathode-ray tube) or a LCD (liquid crystal display), a speaker or the like. The storage portion 28 includes a hard disk or the like in which various management information is stored in addition to contents and licenses. The communication portion 29 includes a modem, a terminal adapter or the like, and has a function of performing a communication process through the Internet 2. More specifically, the communication portion 29 performs a communication process for connecting to the information server 4 to download encrypted contents or connecting to the information server 4 to download a license or perform various registration procedures (which will be described later).

In the drive 30, for example, a recording medium such as a removable magnetic disk 41, an optical disk 42, a magneto-optical disk 43 or a semiconductor memory 44 is removably mounted, and a computer program read out from the recording medium is installed in the storage portion 28 if necessary. The drive 30 may read out contents from the recording medium, or may record contents in the recording medium. Further, the optical disk 42 includes a CD-ROM (Compact Disc-Read Only Memory), a CD-R (Recordable), a CD-RW (ReWritable), a DVD (Digital Versatile Disc)-ROM, a DVD-RW, a DVD + RW and the like, and the semiconductor memory 44 includes, for example, a memory stick (trademark) or the like.

Other information devices 1-2 through 1-4 also have the same hardware structure as that of the information device 1-1 shown in FIG. 2. Further, the information server 4 is a computer having basically the same structure as that of the information device 1-1 shown in FIG. 2, except that time information provided from the timer 20 is used when an absolute time license is generated through the use of a relative time license (which will be described later). Therefore, in the following description, the structure shown in FIG. 2 is also referred to as the structure of the information server 4 if necessary.

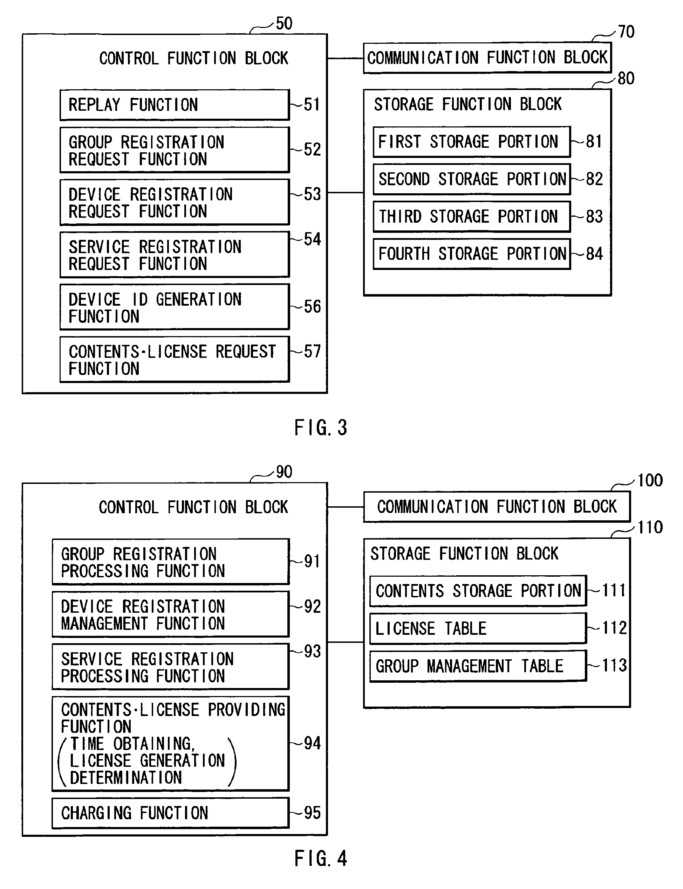

FIG. 3 shows the function structure of the information device 1-1, and corresponds to a basic part of an information processing program for clients according to the embodiment. The functions of the information device 1-1 are broadly divided into a control function block 50, a communication function block 70 and a storage function block 80. The control function block 50 includes a replay function 51, a group registration request function 52, a device registration request function 53, a service registration request function 54, a device ID generation function 56, and a contents·license request function 57. The storage function block 80 includes a first storage portion 81, a second storage portion 82, a third storage portion 83 and a fourth storage portion 84.

The CPU 21, the encryption/decryption portion 24 or the like shown in FIG. 2 is mainly in charge of each function of the control function block 50. The communication portion 29 shown in FIG. 2 is mainly in charge of the communication function block 70, and the storage portion 28 or the RAM 23 is mainly in charge of each function of the storage function block 80.

Each function of the control function block 50 will be described in detail below.

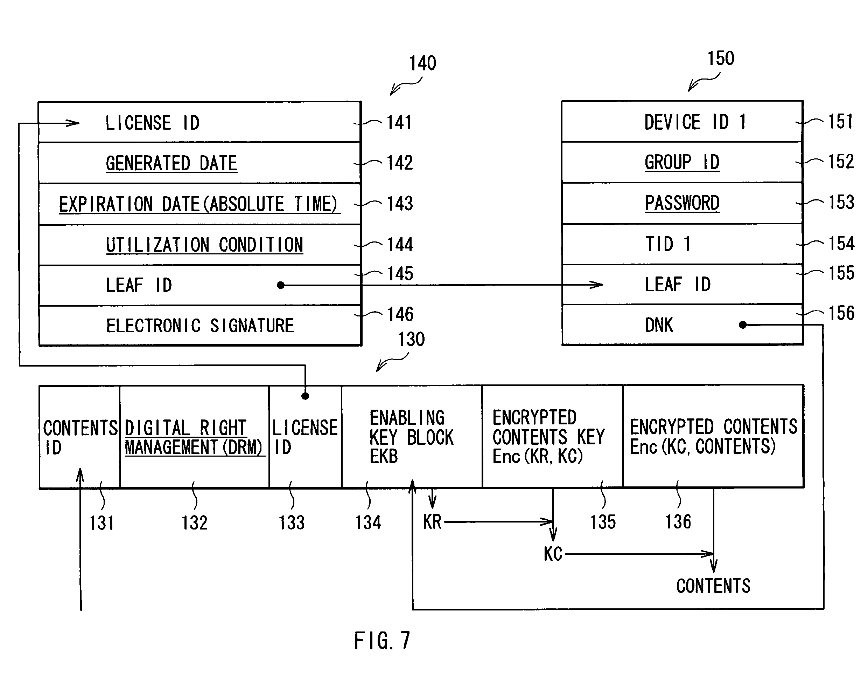

The replay function 51 decrypts and replays contents stored in the first storage portion 81 on the basis of stored information in the second storage portion 82 and the third storage portion 83. When contents are replayed, the replay function 51 refers to an expiration data 143 (refer to FIG. 7) specified in an absolute time license which will be described later, and only in the case where the present time is on or before an expiration date, the replay function 51 performs a contents replay process.

The group registration request function 52 is a function of requesting the information server 4 to register a device group to which its device (the information device 1-1) belongs in the information server 4. The device registration request function 53 is a function of requesting the information server 4 to register the device ID stored in the fourth storage portion 84 in the information server 4. The service registration request function 54 is a function of requesting the information server 4 to register its device as an object to be serviced and transmit the leaf ID and the key information DNK to the device. The device ID generation function 56 is a function of generating a device ID necessary for the device registration request function 53 to store the device ID in the fourth storage portion 84. The contents·license request function 57 is a function of requesting the information server 4 to download contents or a license.

Each function of the storage function block 80 will be described below.

The first storage portion 81 has a function of storing contents provided from the information server 4 or the like, and the second storage portion 82 has a function of storing an absolute time license provided from the information server 4. The third storage portion 83 is a function of storing a leaf ID for grouping and identifying a plurality of information devices and key information DNK for contents decryption commonly provided to each device group together with a group ID provided to each device group. In the example of FIG. 1, the leaf ID and the key information DNK are commonly provided to the information devices 1-1 through 1-3 included in the device group 1G with one group ID. The fourth storage portion 84 has a function of storing a unique device ID for discriminating its device (the information device 1-1) from other information devices 1-2 and 1-3 in the device group 1G.

FIG. 4 shows the function structure of the information server 4, and corresponds to a basic part of an information processing program for a server according to the embodiment. The functions of the information server 4 are broadly divided into a control function block 90, a communication function block 100 and a storage function block 110. The control function block 90 includes a contents·license providing function 94, a group registration processing function 91, a device registration management function 92, a service registration processing function 93 and a charging function 95. The storage function block 110 includes a contents storage portion 111, a license table 112 and a group management table 113.

The CPU 21, the encryption/decryption portion 24, the timer 20 or the like is mainly in charge of each function of the control function block 90, and the communication function block 100 corresponds to an specific example of "transmission means" in the invention, and the communication portion 29 is mainly in charge of the communication function block 100. The storage portion 28 or the RAM 23 is mainly in charge of the storage function block 110.

Each function of the control function block 50 will be described in detail below.

The group registration processing function 91 is a function of associating information about a device group to which an information device intending to utilize contents belongs (group information) with a group identifier and registering the information in response to a group registration request from the information device.

The device registration management function 92 is a function of extracting device identification information for identifying each information device from a device registration request from the information device in response to the device registration request, associating the device identification with a group identifier and registering the device identification information, and deleting the device identification information specified by a device registration deletion request from the information device from the registration in response to the device registration deletion request. The device registration management function 92 also has a function of refusing a device registration request from another information device in the case where the number of device IDs registered in a device group reaches a predetermined number. The group registration processing function 91 and the device registration management function 92 correspond to a specific example of "group management means" in the invention.

The service registration processing function 93 is a function of registering an information device as an object to be serviced in response to a service registration request from the information device, associating a leaf ID and key information DNK with a group ID to register them in a group management table 113, and providing the registered leaf ID and the registered key information DNK to all information devices in a device group to which the information device belongs. The service registration processing function 93 corresponds to an "OpenMG X" registration process in the embodiment.

The contents·license providing function 94 is a function of receiving a request for contents including the leaf ID or a request for a license from the information device 1-1 or the like and providing the requested contents or license to the information device which requests the contents or the license. A function of providing a license includes a time obtaining function of obtaining the present time from the timer 20, a license generation function of generating an absolute time license (refer to FIG. 6 which will be described later) on the basis of the present time and a relative time license (refer to FIG. 5 which will be described later) which is stored in advance, and a determination function of determining the identity or the like of the information device which requests a license when the license is requested. Here, the contents·license providing function 94 corresponds to specific examples of "time obtaining means", "license generation means" and "license providing means" in the invention.

The charging function 95 is a function of extracting a leaf ID from a license request from a information device to check whether the extracted leaf ID has been registered by a group registration function, and judging whether or not to charge for providing a license from the contents·license providing function 94 according to the result.

Each function of the storage function block 110 will be described in detail below.

The contents storage portion 111 previously produces and stores various contents which will be provided in response to a request from an information device. The license table 112 corresponds to a specific example of "license storage means" in the invention, and, for example, as shown in FIG. 5, the license table 112 is a list table of relative time licenses prepared corresponding to contents. As shown in FIG. 6, in the group management table 113, mainly a leaf ID and key information DNK associated with a group ID are registered, and one or a plurality of device IDs associated with a leaf ID are registered, and one or a plurality of kinds of absolute time licenses associated with a group ID are registered. Each absolute time license corresponds to each content. The license table 112 and the group management table 113 will be described in detail below.

FIG. 5 shows an example of the license table 112. In the license table 112, a license ID 127, a relative time license 128 in which the contents of the license are specified with a relative time, and a group ID 129 of the device group to which a license is provided are associated with one another and registered. The relative time license is written in, for example, XML (Extensible Markup Language). In an example shown in FIG. 5, a relative time license "AAA.xml" with a license ID "$L_0$" is associated with three group IDs ("$G_0$", "$G_1$" and "$G_2$"), thereby it is apparent that an absolute time license corresponding to the relative time license is provided to three device groups with the group IDs.

FIG. 6 shows an example of the group management table 113. In the group management table 113, a password 122, group information 123, a device ID 124 and service data 125 which are associated with one another are associated with a group ID 121 and registered. In the drawing, a transaction ID (TID) which will be described later is not shown. In the group management table 113, a license ID 161, a first download time 162 and an absolute time license 163 and a download number 164 which are associated with one another are associated with the group ID 121 and registered. An associated relationship of the group ID:the password:the device ID: the service data:the license ID is 1:1:n:1:m. The values of n and m are positive integers.

The group ID 121 and the password 122 are allocated at the time of group registration, and the device ID 124 is allocated at the time of device registration, and the service data 125 is allocated at the time of service registration.

The group registration herein is registration which is performed only once at the beginning, when a user uses a contents distribution service by the device group 1G. When the group registration is performed, the user obtains a group ID and a password, and device registration and purchase of contents in the contents distribution service can be made through the use of the group ID and the password.

Moreover, the device registration is a process for a server to manage one or more devices owned by a user as one group.

The service registration is a procedure necessary when contents are utilized with an information device of which the device registration is completed, and is a process originally performed in order to prevent the utilization of unauthorized copy of contents between information devices through associating each information device with a contents decryption key. In the embodiment, contents or a license can be freely copied between the information devices in a device group of which the group registration is completed.

The group registration, the device registration and the service registration will be described in detail later.

The group ID 121 specifies a device group and discriminates the device group from other device groups, and is provided to a device group to which an information device requesting group registration belongs in response to a group registration request from the information device. As in the case of the embodiment, in the case where one user corresponds to one device group, the group ID 121 corresponds to a user ID. The password 122 is provided together with the group ID 121 at the time of group registration. The group ID 121 and the password 122 are information provided to each device group from the information server 4 for the sake of convenience when the device group is formed, and they can be recognized by the user. When another information device is registered in the registered device group or when the device registration is deleted, the user is requested to input the group ID 121 and the password 122.

The group information 123 is information about a device group which is provided from the user at the time of group registration. As in the case of the embodiment, in the case where one user corresponds to one device group, the group information 123 corresponds to individual information of the user (the user's name, address, telephone number, e-mail address, credit card number and the like).

The device ID 124 is device identification information used to identify each information device in one device group, that is, device identification information in a local level (in the device group). In other words, the device IDs 124 of information devices in a device group are different from one another, so in this point of view, the device ID 124 is different from the leaf ID commonly provided to the information devices in the device group. By the device ID 124, the number of information devices registered in the device group can be figured out. The device ID 124 is set in the ROM 22 at a manufacturing or purchasing stage in the case where the information device 1-1 is a content-replay-only device; however, in the case where the information device 1-1 is a general-purpose device such as a PC, the device ID 124 is generated by software using random numbers or the like later (for example, at the time of device registration which will be described later). Such software is downloaded from the information server 4, for example, at the time of group registration or device registration to implement the device ID generation function 56 shown in FIG. 3.

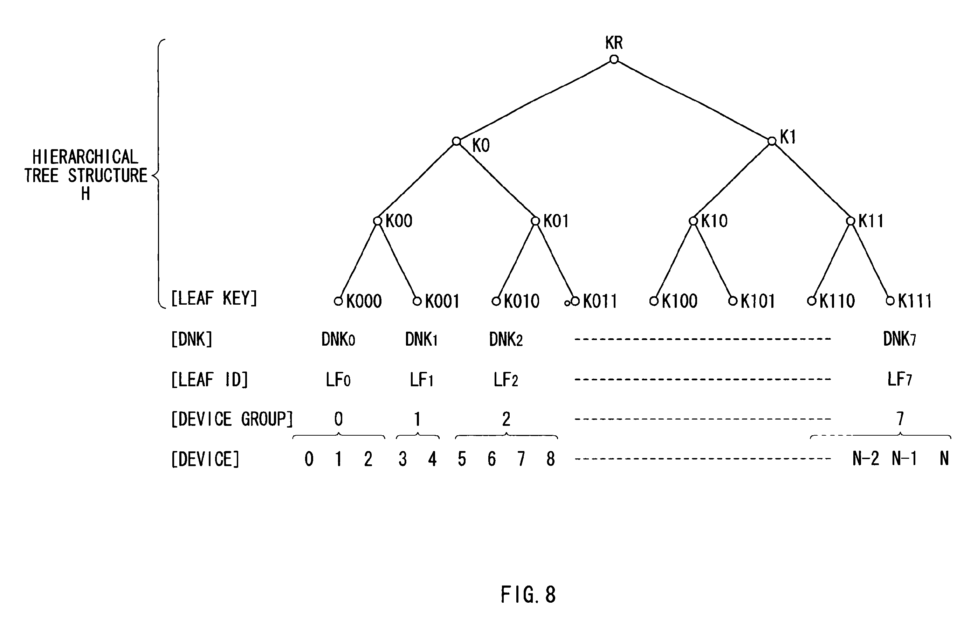

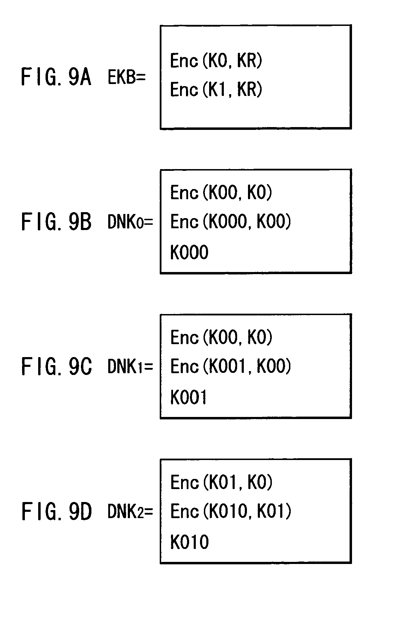

The service data 125 includes the leaf ID and the key information DNK. The leaf ID is information provided to each information device for grouping and identifying a plurality of information devices which intend to utilize contents, and corresponds to a specific example of "grouped device identification information" as described above. In other words, the leaf ID is information provided to each information device for showing that the information device belongs to a device group. The key information DNK is a key for contents decryption, and a device node key (refer to FIGs. 9B through 9D) including a leaf key provided to a node in the bottom layer in nodes of a hierarchical tree structure (refer to FIG. 8) which will be described later. Common key information DNK is provided to each device group. Therefore, all information devices in one device group have the same leaf ID and the same key information DNK. Through the use of the leaf ID and the key information DNK, contents (licensed) can be freely utilized in all information devices in one device group. The significance of the leaf ID and the key information DNK will be described in more detail later.

The license ID 161 corresponds to a license ID 127 in the license table 112 (refer to FIG. 5). The first download time 162 is an absolute time (for example, a download start time) when the license is downloaded by an information device belonging to a device group for the first time, and is represented by, for example, year, month, day, hour, minute and second. The relative time license 128 (refer to FIG. 5) is converted into the absolute time license 163 on the basis of the present time of the information server 4 at the time of downloading, and contents of the absolute time license 163 are specified on the basis of the absolute time. The absolute time license 163 is also written in, for example, XML as in the case of the relative time license 128. The download number 164 shows how many times one absolute time license 163 is downloaded by information devices in the same device group.

In an example shown in FIG. 6, a group ID "$G_0$", a password "ABCD", a leaf ID "$L_0$" and key information DNK "$DNK_0$" are provided to the device group 1G (refer to FIG. 1) including the information devices 1-1 through 1-3. The example shows the state where the information devices 1-1, 1-2 and 1-3 belonging to the device group 1G are registered as information devices having device IDs $D_0$, $D_1$ and $D_2$, respectively. Moreover, in the example shown in the drawing, two kinds of license IDs "$L_0$" and "$L_1$" are provided corresponding to the group ID "$G_0$". The license IDs "$L_0$" and "$L_1$" are license IDs for different contents. For example, in the license ID "$L_0$", "$t_0$" is stored

as the first download time 162, and "aaa0.xml" is registered as the absolute time license 163, and "1" is stored as the download number 164.

FIG. 7 shows contents of information stored in the storage function block 80 (refer to FIG. 3) of the information device 1-1. More specifically, for example, FIG. 7 shows contents stored in the storage portion 28 (refer to FIG. 2). In the drawing, underlined information can be recognized (seen) by a user. Moreover, information which is not underlined such as the leaf ID or the key information DNK is secured information which cannot be recognized by the user, so the user cannot perform manipulation such as copy and transfer of the information.

The storage function block 80 stores a contents file 130, an absolute time license 140 and user data 150. The storage of the contents file 130, the license 140 and the user data 150 is supported by the first storage portion 81, the second storage portion 82, and the third storage portion 83, respectively.

At first, the contents file 130 will be described below. The contents file 130 includes a header (Header) portion and a data (Data) portion. The header portion includes contents identification information (contents ID) 131, digital right management (DRM) 132, a license ID 133, an enabling key block EKB 134 and an encrypted contents key 135. The data portion includes encrypted contents 136. The encrypted contents 136 are divided into a plurality of blocks to be encrypted.

The contents ID 131 is information for specifying or identifying contents. Further, in addition to the contents ID 131, accompanying information such as a codec mode of the contents may be included.

The digital right management 132 includes usage rules and status of the contents, the URL (uniform resource locator) of a web page of the information server 4 or the like. As the usage rules and status, for example, the number of times where the contents are replayed or copied is included. The URL is address information of the information server 4 used not only in the case where the information device 1-1 obtains an absolute time license specified by the license ID 133 from the information server 4 but also in the case where a group registration request, a device registration request, a service registration request and a registration deletion request are made.

The license ID 133 identifies an absolute time license necessary to utilize the encrypted contents 136, and is the same as that described in FIGs. 5 and 6. The contents file 130 and the absolute time license 140 are connected to each other by the license ID 133.

The enabling key block EKB 134 is an encrypted portion including at least a root key KR on a path from a bottom layer node key (leaf key) to a top layer node key (root key KR) in the hierarchical tree structure (refer to FIG. 8) which will be described later, and the enabling key block EKB 134 has, for example, a structure shown in FIG. 9A. The encrypted contents 136 can be decrypted through the use of the enabling key block EKB 134 and the key information DNK provided from the information server 4. This will be described later referring to FIGs. 8 and 9A through 9D.

The encrypted contents key 135 is a contents key KC encrypted through the use of the root key KR generated from the enabling key block EKB 134. The encrypted contents 136 are encrypted through the use of the contents key KC which is obtained through decrypting the encrypted contents key 135.

Next, the absolute time license 140 will be described below. The absolute time license 140 includes a license ID 141, a generated date 142, an expiration date 143, a utilization condition 144, a leaf ID 145 and an electronic signature 146. The absolute time license 140 is connected to the user data 150 through including the leaf ID 145. Further, the license ID 141 and the leaf ID 145 are synonymous with those described above (refer to FIG. 6).

The license ID141 is the same as the license ID 127 described referring to FIGs. 5 and 6. The generated date 142 is the time when the license is generated (the present time), and in reality, the time (year, month, day, hour, minute and second) when the information server 4 transmits the absolute time license 140 to an information device is set as the generated date 142. The expiration date 143 is an expiration date by which the contents can be utilized on the basis of the absolute time license 140, and is represented by an absolute time (year, month, day, hour, minute and second). The utilization condition 144 includes an download expiration date by which the contents can be downloaded on the basis of the license, the number of times where the contents can be copied on the basis of the license (allowed number of copy), the number of checkouts, the maximum number of checkouts, a right to be able to store the contents in a recording medium such as a CD-RW or an information device such as a PD (portable device) on the basis of the license, a right to be able to shift the license to a property right (a purchase state), information showing an obligation to keep a log of utilization and the like.

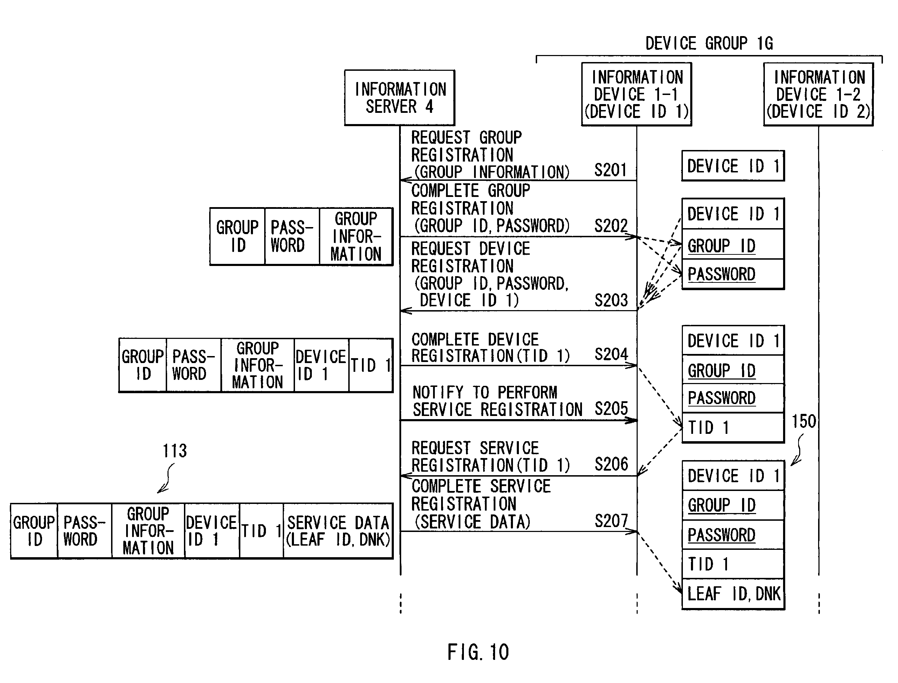

Next, the user data 150 will be described below. The user data 150 includes a device ID 151, a group ID 152, a password 153, a transaction ID (TID) 154, a leaf ID 155 and key information DNK 156. The user data 150 is connected to the absolute time license 140 through including the leaf ID 155. As the key information DNK 156 is included, the contents file 130 can be used through the use of the key information DNK 156. The TID 154 is used to connect various registration procedures in FIGs. 10 through 12 which will be described later to one another, thereby convenience is provided to the user.

The device ID 151, the group ID 152, the password 153, the leaf ID 155 and the key information DNK 156 are synonymous with those described in FIG. 5.

FIG. 8 shows an example of a hierarchical tree structure H for controlling an information device (a device) and a license key (a key for contents decryption) on the basis of the principle of a broadcast encryption system.

In this control system, each key is determined corresponding to each node marked with a circle in the tree structure. In other words, the keys constitute a hierarchical tree structure from the root key KR in the top layer to the leaf key in the bottom layer. More specifically, the root key KR is determined corresponding to a root node in the top layer, and keys K0 and K1 are determined corresponding to nodes in the second layer. Keys K00 through K11 are determined corresponding to nodes in the third layer, and keys K000 through K111 are determined corresponding to nodes in the bottom layer. For example, a higher key than the key K000 and the key K001 is K00, and a higher key than the key K00 and the key K01 is the key K0, a higher key than the key K0 and the key 1 is the root key KR. The same holds true on any other keys, and in the structure, any leaf key is connected to the root key KR through a path from a lower layer to a higher layer. A higher-level key is encrypted by a key directly below the higher-level key.

A node in the bottom layer is called a leaf, as the node in the bottom layer corresponds to the position of a leaf in a tree structure, and the keys K000 through K111 provided to the node is called leaf keys as described above. In the example shown here, each leaf corresponds to each of eight device groups with number 0 through 7. As will be described later (refer to FIGs. 9A through 9D), each leaf key is a part of the key information DNK provided to a corresponding leaf. The key information DNK ($DNK_0$ through $DNK_7$ herein) is set corresponding to eight device groups with number 0 through 7, and in order to specifically identify each device group, leaf IDs ($LF_0$ through $LF_7$ herein) are provided to the device groups. Each device group includes one or two or more devices (information devices). In the example shown in FIG. 8, a device group [0] includes three devices [0], [1] and [2], a device group [1] includes two devices [3] and [4], and a device group [2] includes four devices [5], [6], [7] and [8]. The same holds true for the other device groups [3] through [7].

Contents provided from the information server 4 are multiply encrypted through the use of each node key on a path from a leaf key in the bottom layer to the root key KR in the top layer in the hierarchical tree structure. Thus, in order to decrypt and utilize the multiply encrypted contents, for example, the enabling key block EKB and the key information DNK with a structure shown in FIGs. 9A through 9D are used.

FIG. 9A shows an example of the enabling key block EKB. In the example shown in FIG. 9A, the enabling key block EKB includes two data Enc(K0, KR) and Enc (K1, KR). Herein, Enc(K0, KR) is data of the root key KR encrypted by the node key K0 directly below the root key KR, and Enc(K1, KR) is data of the root key KR encrypted by the node key K1 directly below the root key KR.

FIGs. 9B through 9D show examples of the key information DNK. As shown in FIG. 9B, the key information $DNK_0$ provided to the device group [0] includes three data Enc(K00, K0), Enc(K000, K00) and the leaf key K000. Enc(K00, K0) is data of the node key K0 encrypted by the node key K00 directly below the node key K0, and Enc(K000, K00) is data of the node key K00 encrypted by the leaf key K000 directly below the node key K00. As shown in FIG. 9C, the key information $DNK_1$ provided to the device group [1] includes three data Enc(K00, K0), Enc(K001, K00) and the leaf key K001. Enc(K00, K0) is data of the node key K0 encrypted by the node key K00 directly below the node key K0, and Enc(K001, K00) is data of the node key K00 encrypted by the leaf key K001 directly below the node key K00. As shown in FIG. 9D, the key information $DNK_2$ provided to the device group [2] includes three data Enc(K01, K0), Enc(K010, K01) and the leaf key K010. Enc(K01, K0) is data of the node key K0 encrypted by the node key K01 directly below the node key K0, and Enc(K010, K01) is data of the node key K01 encrypted by the leaf key K010 directly below the node key K01. The same hold true for the key information $DNK_3$ through $DNK_7$ provided to the other device groups [3] through [7] (not shown).

In FIG. 8, for example, in the device group [2], a path from the leaf key K010 to the root key KR corresponding to the device group [2] is determined by three data Enc(K010, K01), Enc(K01, K0) and Enc(K0, KR). Therefore, the enabling key block EKB shown in FIG. 9A and the key information $DNK_2$ shown in FIG. 9C are combined to sequentially decrypt node keys on the path from the bottom layer to the top layer in the hierarchical tree structure, thereby the root key KR is obtained, and the contents can be decrypted through the use of the obtained root key KR. As shown in FIG. 7, the contents are not encrypted directly by the root key KR, but the contents are encrypted through the use of the encrypted contents key Enc(KR, KC) encrypted by the root key KR, so in reality, the encrypted contents key Enc(KR, KC) is decrypted by the root key KR at first, and then the encrypted contents Enc(KC, CONTENS) is decrypted by the obtained contents key KC, thereby final contents CONTENS can be obtained. The same holds true on the other device groups.

As a result, only information devices belonging to a device group to which the key information $DNK_i$ [i = 0 to 8] is provided can decrypt encryption to utilize the content.

Thus, in the embodiment, one or two or more devices (information devices) owned by a user are put into one device group, and the device group is allocated to a leaf node in the bottom layer of the hierarchical tree structure in FIG. 8 to provide a leaf ID and key information DNK to the device group. As a result, the same (common) leaf ID and the same (common) key information DNK are provided to all information devices in one device group. For example, in the example shown in FIG. 8, the same leaf ID ($LF_0$) and the same key information $DNK_0$ are provided to three devices [0] through [2] in the device group [0], and the same leaf ID ($LF_1$) and the same key information $DNK_1$ are provided to two devices [3] and [4] in the device group [1], and the same leaf ID ($LF_2$) and

the same key information $DNK_2$ are provided to four devices [5] through [8] in the device group [2]. The same holds true on devices in any other device group.

Moreover, in the embodiment, the license management is performed by a license specified with an absolute time, not a relative time. Therefore, as will be described later, even in the case of redownloading, the expiration date can be always a predetermined date. The utilization of contents by an illegal extension of the expiration date by a user can be prevented.

Next, referring to FIGs. 10 through 13, the action of an information processing system with the above structure will be described below. FIGs. 10 through 13 show a series of communications between the information devices 1-1 and 1-2 and the information server 4. As an example, the case where the device group 1G including the information devices 1-1 through 1-3 is registered in the information server 4 will be described below. In the following description, the information devices 1-1 and 1-2 initially have device IDs 1 and 2, respectively. However, as described above, the information device may generate and hold a device ID by software in a device registration procedure.

At first, referring to FIG. 10, a process of performing the group registration of the device group 1G by using the information device 1-1, and registering the information device 1-1 as a device belonging to the registered device group 1G will be described below.

In the information device 1-1, at first, the group registration request function 52 (refer to FIG. 3) requests the information server 4 through the communication function block 70 to perform group registration (refer to FIG. 10; step S201). The group registration request is performed through accessing a web page of the information server 4. When the user inputs group information (for example, user information such as the user's address, name, telephone number and mail address) about the device group to be registered from the input portion 26 (refer to FIG. 2) in the web page, and clicks the submit button (not shown), the group information together with the group registration request is submitted to the information server 4 through the communication function block 70.

When the information server 4 receives the group registration request from the information device 1-1 through the communication function block 100, the group registration processing function 91 (refer to FIG. 4) is activated to extract the group information from the group registration request and issue a group ID and a password, and then the group ID and the password together with the group information are registered in a group management table (refer to FIG. 6). Then, the group registration processing function 91 transmits the issued group ID and the issued password together with a notice of the group registration completion to the information device 1-1 through the communication function block 100 (step S202).

When the information device 1-1 receives the notice of the group registration completion from the information server 4 through the communication function block 70, the group registration request function 52 extracts the group ID and the password from the notice of the group registration completion to store them in the user data 150 (refer to FIG. 7) of the third storage portion 83.

Next, in the information device 1-1, the device registration request function 53 requests the information server 4 through the communication function block 70 to perform device registration (step S203). When the user accesses the web page of the information server 4 to input the group ID and the password from the input portion 26 (refer to FIG. 2), and then clicks the submit button, the device registration request is performed. At this time, the device registration request function 53 reads out the device ID 1 from the user data 150 (refer to FIG. 7) to transmit the device ID 1 together with the group ID and the password to the information server 4 through the communication function block 70.

When the information server 4 receives the device registration request from the information device 1-1 through the communication function block 100, the device registration management function 92 (refer to FIG. 4) is activated to extract the device ID 1 from the device registration request, and the device ID 1 is associated with the group ID, and is registered in the group management table 113 (refer to FIG. 6). At this time, the device registration management function 92 issues a transaction ID 1 (TID 1) for associating the present process (a device registration process) with the next process (a server registration process) to associate the TID 1 with the device ID 1 and register the TID 1 in the group management table 113 (refer to FIG. 6). Then, the device registration management function 92 transmits a notice of the device registration completion together with the issued TID 1 to the information device 1-1 through the communication function block 100 (step S204). As will be described later, the TID 1 is used to reduce the user's burden of input in further procedures. Further, as will be described later, when the number of devices to be registered exceeds the maximum number of devices which can be registered, the device registration management function 92 transmits a notice of such a case to the information device 1-1.

When the information device 1-1 receives the notice of the device registration completion from the information server 4 through the communication function block 70, the device registration request function 53 extracts the TID 1 from the notice of the device registration completion to store the TID 1 in the user data 150 (refer to FIG. 7) of the third storage portion 83.

In this stage, in the information server 4, the service registration processing function 93 is activated, and the service registration processing function 93 notifies the information device 1-1 of which the device registration is completed through the communication function block 100 to perform service registration (for example, registration on the basis of the above-described "OpenMG X") (step S205).

In the information device 1-1 which is notified to perform the service registration, the service registration request function 54 is activated to request the information server 4 through the communication function block 70 to perform the service registration (step S206). The service registration request is made, for example, when the user clicks the "agreed" button (not shown) in a web page for service registration sent from the information server 4. In other words, when the user clicks the button, the service registration request function 54 reads out the TID 1 from the user data 150 (refer to FIG. 7) to transmit the TID 1 together with the service registration request to the information server 4. Therefore, it is not necessary for the user to input the group ID and the password again.

When the information server 4 receives the service registration request from the information device 1-1 through the communication function block 100, the service registration processing function 93 (refer to FIG. 4) is activated to extract the TID 1 from the service registration request, and then the service registration processing function 93 judges which information device requests the service registration and whether the user who owns the information device requesting the service registration has completed the service registration or not on the basis of the extracted TID 1. Here, the service registration processing function 93 judges that the request is from the information device 1-1 belonging to a device group of which the group registration has not been completed, so the service registration processing function 93 issues a leaf ID and key information DNK, and the leaf ID and the key information DNK are associated with the group ID of the information device 1-1, and registered in the group management table 113 (refer to FIG. 6). Then, the service registration processing function 93 transmits service data including the leaf ID and the key information DNK together with a notice of service registration completion to the information device 1-1 through the communication function block 100 (step S207).

When the information device 1-1 receives the notice of the service registration completion from the information server 4 through the communication function block 70, the service registration request function 54 extracts the service data including the leaf ID and the key information DNK from the notice of the service registration completion to store the service data together with the group ID in the user data 150 (refer to FIG. 7) of the third storage portion 83 securely (safely and secretly). At this stage, all necessary prior registrations for the information device 1-1 for the utilization of contents are completed. Therefore, the user can access the information server 4 through the information device 1-1 to download contents and a license, and the user can utilize the downloaded contents or can copy and utilize contents and a license downloaded by the information device 1-2 or the like in the device group 1G from then on. The detailed description will be given later.

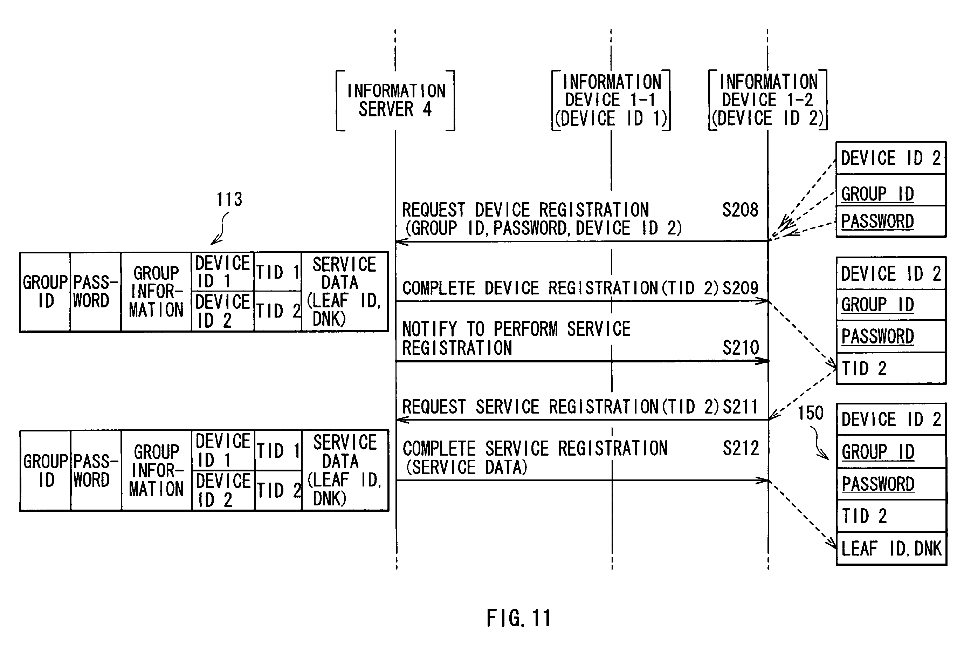

Next, referring to FIG. 11, a process in the case where the information device 1-2 is included in the device group 1G will be described below. The process is basically and substantially the same as the process in the case where the information device 1-1 is included in the device group 1G (steps S203 through S207), so it will not be further described.

At first, in the information device 1-2, the device registration request function 53 requests the information server 4 through the communication function block 70 to perform device registration (refer to FIG. 11; step S208). The device registration request is performed, when the user accesses the web page of the information server 4 to input the group ID and the password which have been already obtained by the information device 1-1 from the input portion 26 (refer to FIG. 2), and clicks the submit button. Thereby, the device registration request function 53 reads out the device ID 2 from the user data 150 (refer to FIG. 7) to transmit the device ID 2 together with the group ID and the password inputted by the user to the information server 4. At this time, the device registration request function 53 stores the inputted group ID and the inputted password together with the device ID 2 in the user data 150 (refer to FIG. 7) of the third storage portion 83 (refer to FIG. 3).

When the information server 4 receives the device registration request from the information device 1-2 through the communication function block 100, the device registration management function 92 extracts the device ID 2 from the device registration request to associate the device ID 2 with the group ID and additionally register the device ID 2 in the group management table 113 (refer to FIG. 6). The device registration management function 92 issues a transaction ID 2 (TID 2) to associate the TID 2 with the device ID 2 and register the TID 2 in the group management table 113. Then, the device registration management function 92 transmits a notice of device registration completion together with the issued TID 2 to the information device 1-2 through communication function block 100 (step S209). The TID 2 is used for the same purpose as that of the above TID 1.

When the information device 1-2 receives the notice of the device registration completion from the information server 4 through the communication function block 70, the device registration request function 53 extracts the TID 2 from the notice of the device registration completion to store the TID 2 in the user data 150 (refer to FIG. 7) of the third storage portion 83.

At this stage, in the information server 4, the service registration processing function 93 is activated, and notifies the information device 1-2 of which the device registration is completed through the communication function block 100 to perform service registration (step S210). The service registration processing function 93 notifies the information device 1-2, for example, through sending a web page for service registration to the information device 1-2.

In the information device 1-2 which is notified to perform the service registration, the service registration request function 54 is activated to request the information server 4 through the communication function block 70 to perform the service registration (step S211). The service registration request is performed, when the user clicks the "agreed" button (not shown) in the web page for service registration sent from the information server 4 as in the case of the above information device 1-1. In other words, when the user clicks the button, the service registration request function 54 reads out the TID 2 from the user data 150 (refer to FIG. 7) of the third storage portion 83 to transmit the TID 2 together with the service registration request to the information server 4. Therefore, it is not necessary for the user to input the group ID and the password again.

When the information server 4 receives the service registration request from the information device 1-2 through the communication function block 100, the service registration processing function 93 (refer to FIG. 4) is activated to extract the TID 2 from the service registration request, and the service registration processing function 93 judges which information device requests the service registration and whether the group registration has been completed or not on the basis of the extracted TID 2. Here, the service registration processing function 93 judges that the request is from the information device 1-2 belonging to the device group 1G of which the group registration has been completed, so the leaf ID and the key information DNK registered corresponding to the group ID of the information device 1-2 are read out from the group management table 113 to transmit service data including the leaf ID and the key information DNK together with a notice of service registration completion through the communication function block 100 (step S212).

When the information device 1-2 receives the notice of the service registration completion from the information server 4 through the communication function block 70, the service registration request function 54 extracts the leaf ID and the key information DNK from the notice of the service registration completion to register the extracted information in the user data 150 (refer to FIG. 7) of the third storage portion 83. At this stage, all necessary prior registrations for the information device 1-2 for the utilization of contents are completed. Therefore, the user can access the information server 4 through the information device 1-2 to download contents and a license, and the user can utilize the downloaded contents or can copy and utilize contents and a license downloaded by the information device 1-1 or the like in the device group 1G in the information device 1-2 from then on. The detailed description will be given later.

Likewise, in the case of the information device 1-3 in the device group 1G, through performing the device registration process and the service registration process, the user can access the information server 4 through the information device 1-3 to download contents and a license, and then utilize the downloaded contents or copy and utilize the contents and the license downloaded by the information device 1-1 or the like in the device group 1G in the information device 1-3.

In the embodiment, the device registration procedure is associated with a registration procedure through the use of the transaction ID; however, it is not necessarily required, so it can be removed. In this case, at the service registration request (step S206), the user may be requested to input the group ID and the password.

Thus, the information server 4 recognizes a plurality of information devices owned by the user as one device group; however, if no limit is placed on the device registration, there will be no limit on the utilization of contents in practical, so a licenser will suffer a larger loss. In order to prevent the loss, in the embodiment, as described above, the number of information devices which can be included in one device group is limited. More specifically, when the information server 4 receives a device registration request from an information device, the information server 4 checks the number of device IDs registered in one device group of the group management table 113 (refer to FIG. 6), and when the number reaches a predetermined number n, the information server 4 refuses the device registration request, and transmits a notice of such a case to the information device. In general, the maximum number of information devices that one user can register is determined by service rules of a distribution service provider.

Moreover, for example, in the case where after the number of information devices registered by the user reaches the upper limit n of the number of information devices which can be registered, the user wants to register a new information device such as the case where the user replaces the information device owned by the user with a new one, at first, device registration deletion is performed to reduce the number of registered devices, and then the registration of the new information device may be requested.

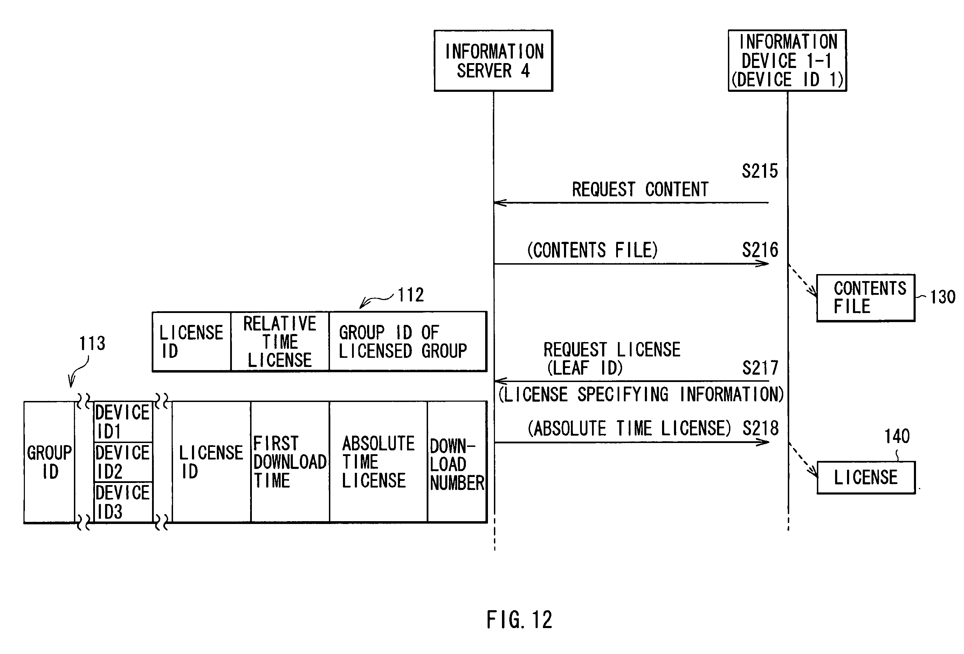

Next, referring to FIG. 12, a process of providing/obtaining contents and a license will be described below. The contents already produced are stored in the information server 4, so even a person who has not perform the group registration, the device registration and the service registration, or does not obtain the license can download the contents; however, without the registration or the license, the contents cannot be utilized, as will be described later.

When the contents are downloaded, in the information device 1-1, at first, the contents·license request function 57 is activated according to an input operation by the user to request the information server 4 through the communication function block 70 to provide the contents (refer to FIG. 12; step S215). More specifically, when the user operates the input portion 26 to specify the contents that the user wants, the contents·license request function 57 retrieves information specifying the contents (contents specifying information) to transmit the contents specifying information together with the contents request to the information server 4.

When the information server 4 receives the contents request from the information device 1-1 through the communication function block 100, the contents·license providing function 94 is activated to extract the contents specifying information from the received contents request. The contents·license providing function 94 reads out a contents file specified by the extracted contents specifying information from the contents storage portion 111 to transmit the contents file to the information device 1-1 through the communication function block 100 (step S216).

When the information device 1-1 receives the contents file from the information server 4 through the communication function block 70, the contents·license request function 57 stores the contents file in the first storage portion 81. Thereby, as shown in FIG. 7, the information device 1-1 can store the contents file 130 linked to the absolute time license 140 by the license ID.

Next, a procedure of obtaining the license will be described below. Here, the case where the license is purchased through accessing the information server 4 through the use of the information device 1-1 will be described below.

In the information device 1-1, at first, the contents·license request function 57 is activated according to an input operation by the user to request a license from the information server 4 through the communication function block 70 (refer to FIG. 12; step S217). When the information server 4 receives the license request from the information device 1-1 through the communication function block 100, the contents · license providing function 94 is activated to read out a specified absolute time license, and transmit the absolute time license to the information device 1-1 through the communication function block 70 (step S218). However, in the case where the license request is made from the device group 1G for the first time, the absolute time license has not been stored in the group management table 113 yet, so the relative time license in the license table 112 is converted into an absolute time license, and then the absolute time license is transmitted. When the information device 1-1 receives the license from the information server 4 through the communication function block 70, the contents·license request function 57 stores the absolute time license in the second storage portion 82.

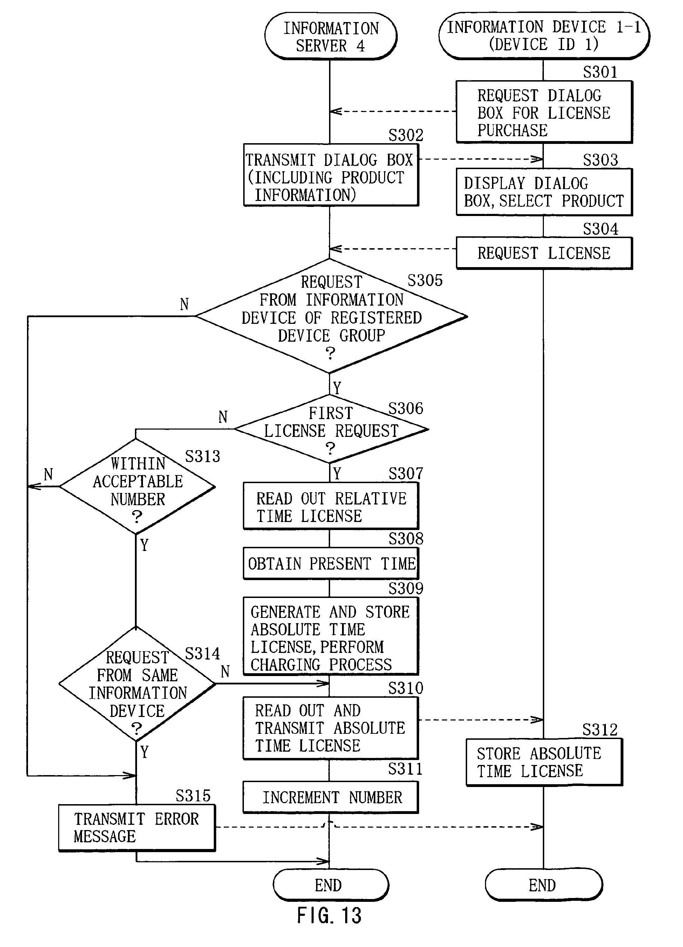

Referring to FIG. 13, the above license obtaining process will be described in more detail below.

When a license is obtained, at first, the information device 1-1 requests the information server 4 to transmit a dialog box for license purchase (refer to FIG. 13; step S301). The information server 4 which receives the request transmits the dialog box including product information to the information device 1-1 (step S302). The product information in this case includes titles of various contents and a license ID corresponding to each of contents. When the information device 1-1 receives the dialog box from the information server 4, the dialog box is outputted to the output portion 27 (refer to FIG. 1) to be displayed, and then the dialog box conducts selection by a user (step S303). When the user selects one of licenses, the information device 1-1 transmits license specifying information which specifies the selected license together with the leaf ID to the information server 4 to request the license (step S304). More specifically, when the user operates the input portion 26 to input the group ID and the password that the user has already obtained, and specify a license necessary to utilize the above-described downloaded contents, the contents·license request function 57 retrieves information specifying the license (license specifying information), and reads out the leaf ID from the user data 150 (refer to FIG. 7) to transmit the leaf ID and the license specifying information together with the license request to the information server 4.

The information server 4 extracts the leaf ID and the license specifying information from the license request received from the information device 1-1, and judges whether the license request is from an information device belonging to a registered device group or not referring to the group management table 113 on the basis of the leaf ID (step S305). More specifically, the information server 4 judges by whether the group ID corresponding to the leaf ID is registered in the group management table 113 or not. In the case where the license request is from the information device belonging to the registered device group (step S305; Y), the information server 4 proceeds to the next step S306, and in the case where the license request is not from the information device belonging to the registered device group (step S305; N), the information server 4 transmits an error message that group registration has not completed to the information device 1-1 (step S315).

In the next step S306, the information server 4 checks whether the license request is made for the first time in the device group or not, only in the case where the same license is requested. More specifically, the information server 4 checks whether there is an absolute time license corresponding to the group ID checked in the above step or not. In addition, the first time means that it is the first time to request a license for the same content. In the case where the absolute time license corresponding to the group ID is not registered in the group management table 113, the information server 4 judges that the license is requested for the first time in the device group (step S306; Y). Then, the information server 4 reads out the license ID 127 (for example "$L_0$") and the relative time license 128 (for example, AAA.xml) corresponding to the license specifying information extracted from the license table 112 (refer to FIG. 5) (step S307) and obtains the present time from the timer 20 (refer to FIG. 1) (step S308), and then the information server 4 generates the absolute time license 163 on the basis of them, and stores the absolute time license 163 associated with a corresponding group ID in the group management table 113 (refer to FIG. 6), and performs a charging process by the charging function 95 (refer to FIG. 4) (step S309). For example, the contents of the absolute time license 163 are the same as those in the absolute time license 140 in FIG. 7, and the absolute time license 163 includes the leaf ID extracted from the license request in addition to information including a version, a generated date, an expiration date specified with an absolute time, and a utilization condition and the like.

The absolute time license 163 is generated through the following steps, for example. Assuming that an expiration date (a relative expiration date) specified with a relative time in the relative time license 128 is Tr, and the present time is $t_0$, an expiration date (an absolute expiration date) Ta is represented by Formula 1.

$$(\text{Formula 1})$$

$$Ta = t_0 + Tr + Bs + Be$$

In the formula, Bs is a start buffer, and Be is an end buffer. In this case, the start buffer and the end buffer mean a time which is added or subtracted in consideration of a time difference between the information server 4 and the information device 1-1, a necessary time for transmitting the absolute time license from the information server 4 to the information device 1-1 and the like. More specifically, it can be considered that with attention to the case where the time of the information device 1-1 lags behind the time of information server 4, the value of the start buffer is set to, for example, "-1 hour". Moreover, it can be considered that with attention to a necessary time for transmission from the information server 4 to the information device 1-1, the value of the end buffer is set to, for example, "+1 hour". Thus, when a time difference, or a necessary time for transmission is taken into consideration, an accurate time conversion which is more appropriate to conditions (with consideration to communication conditions or the like) can be performed. The start buffer and the end buffer are not necessarily required, so either or both of them can be removed.

The information server 4 reads out the absolute time license 163 which is generated and stored in such a manner from the group management table 113, and a signature is added to the absolute time license 163 through the use of a secret key (not shown), and the information server 4 transmits the absolute time license 163 to the information device 1-1 (step S310). Moreover, the information server 4 counts up the download number in the group ID from "0" to "1" in the group management table 113 (step S311).

On the other hand, in the step S306, in the case where an absolute time license corresponding to the group ID is registered in the group management table 113, the information server 4 judges that the license request is made for the second or more time in the device group (step S306; N). Next, the information server 4 confirms the download number referring to the group management table 113 (step S313). As a result, in the case where the download number in the group ID has already reached an acceptable number (step S313; N), the information server 4 transmits a message that the license cannot be downloaded to the information device 1-1 (step S315). In the case where the download number has not reached the acceptable number yet (step S313; Y), the information server 4 proceeds to the next step S314.

In the step S314, the information server 4 judges whether the license request is made from the same information device as the device which has downloaded before or not. As a result, in the case where the request is made from the same information device (step S314; Y), the information server 4 transmits an error message that the license cannot be downloaded by the same information device (step S315) to the information device 1-1. On the other hand, in the case where the request is made from another information device in the same device group (step S314; N), the absolute time license 163 associated with the group ID of the device group to which the information device belongs and registered is read out through referring to the group management table 113, and is transmitted to the information device 1-1 (step S310), and the download number in the group ID is incremented, for example, from "1" to "2" in the group management table 113 (step S311). Moreover, in the step S306, when the information server 4 judges that the license request is made for the second or more time in the device group, the group ID has been already registered, so no charging process is performed.

When the information device 1-1 receives the absolute time license from the information server 4 through the communication function block 70, the contents·license request function 57 stores the absolute time license in the second storage portion 82. Thereby, the information device 1-1 has the absolute time license 140 linked with the user data 150 by the leaf ID as shown in FIG. 7. Therefore, from then on, the user can freely utilize the contents through the use of the information device 1-1 within the conditions defined in the license.

The license obtaining process can be performed before obtaining the content.

Thus, the user can obtain the same license as that purchased from the information server 4 with the information device 1-1 again through the use of the information device 1-2 in the device group 1G without paying again. The license can be obtained again through the use of the information device 1-3 in the device group 1G in the same manner without paying. However, in this case, the expiration date of the license is specified with an absolute time, so in the license obtained through redownloading, the utilization of the contents is limited within the same expiration date as the expiration date of the license obtained at the time of downloading for the first time. Therefore, a disadvantage that the user illegally extends the expiration date of the contents through repeatedly redownloading can be prevented.

Next, referring to FIG. 13, a process of replaying contents through the use of the information device 1-1 will be described below.

When the user operates the input portion 26 to order the replay of contents, the replay function 51 (refer to FIG. 3) is activated to read out the license ID 133 corresponding to the specified contents from the contents file 130 (refer to FIG. 7) stored in the first storage portion 81. The replay function 51 judges whether the license corresponding to the license ID 133 is obtained or not. In the case where the replay function 51 judges that the license has been already obtained, the replay function 51 judges whether the obtained license is within the expiration date or not. Whether the license is within the expiration date or not is judged through comparing between the expiration date 143 (refer to FIG. 7) specified with an absolute time as a content of the absolute time license 140 and the present time kept by the timer 20. In the case where the replay function 51 judges that the expiration date has been already reached, the user is urged to execute a license renewal process or the like.

Next, the replay function 51 reads out the leaf ID 145 from the absolute time license 140 (refer to FIG. 7) stored in the second storage portion 82 on the basis of the read license ID 133. Moreover, the replay function 51 reads out the key information DNK 156 from the user data 150 (refer to FIG. 7) of the third storage portion 83 on the basis of the read leaf ID. The replay function 51 decrypts the enabling key block EKB 134 of the contents file 130 (refer to FIG. 7) through the use of the key information DNK 156 to obtain the root key KR. For example, when the information device 1-1 belongs to the device group [0], the enabling key block EKB (refer to FIG. 9A) is decrypted through the use of the key information $DNK_0$ (refer to FIG. 9B). More specifically, at first, Enc(K000, K00) is decrypted by the leaf key K000 in the key information $DNK_0$ to obtain the node key K00, and the Enc(K00, K0) is decrypted by the obtained node key K00 to obtain the node key K0, and then Enc(K0, KR) of the enabling key block EKB is decrypted by the obtained node key K0 to obtain the root key KR. The replay function 51 decrypts the encrypted contents key 135 (=Enc(KR, KC)) by the obtained root key KR to obtain the contents key KC, and the encrypted contents 136 (=Enc(KC, CONTENTS)) is decrypted by the obtained contents key KC, and then finally the contents CONTENS in a usable form can be obtained. The replay function 51 replays the contents decrypted through the above steps to output the contents from the output portion 27.

A process of replaying the contents through the use of the information device 1-2 or 1-3 is the same as that in the case of the information device 1-1.

There are two methods of obtaining the contents and the license in the case of the information devices 1-2 and 1-3. One of the methods is directly downloading them from the information server 4 as described above. Another method is copying the contents and the license downloaded from the information server 4 by the information device 1-1 to the information device 1-2. In both methods, the information devices 1-2 and 1-3 can decrypt and replay the obtained contents, because the information devices 1-2 and 1-3 have already obtained the service data (including the leaf ID and the key information DNK) necessary to replay the contents through performing the device registration and the service registration in the information server 4.

As described above, in the embodiment, a user (a device group) and each information device in the device group are associated with each other and controlled in the information server, and the same service data (the leaf ID and the key information DNK) is written in information devices owned by the same user, thereby a plurality of information devices owned by the user are treated as a device group. Therefore, the same contents and the same license can be utilized in the information devices in the same group. More specifically, for example, if contents and a license in an information device are copied to another information device in the same group through a typical method of operating a file, another information device can replay the content. In other words, when the user downloads the contents and the license through the use of an information device, the contents can be utilized in any other information device owned by the user only by a typical copying process. Therefore, it is not necessary to connect each information device to the server through a network many times to download the content. Moreover, after an information device obtains contents and a license from the information server, another information device in the same group can obtain the same contents and the same license from the information server again. At this time, no charging process is executed. Thereby, for example, even if the user is away from his information device storing contents that user wants to utilize, the user can utilize the contents through the use of any other information device owned by the user at the time.

Moreover, in the embodiment, in the information server, the license is stored in a database as a relative time license, and the relative time license is converted into an absolute time license at the time of a first download request from an information device, and the absolute time license is provided to the information device, so the expiration date of the license can be always specified with an absolute time. Therefore, regardless of a license obtained by downloading by a user for the first time or by redownloading, the utilization of contents is always limited by an expiration date of the license obtained by downloading for the first time. Therefore, a disadvantage that the user illegally extends the expiration date of the contents through repeatedly redownloading can be prevented. Moreover, the embodiment is specifically effective in the case where the information device cannot interpret a relative time license, and can interpret only an absolute time license.

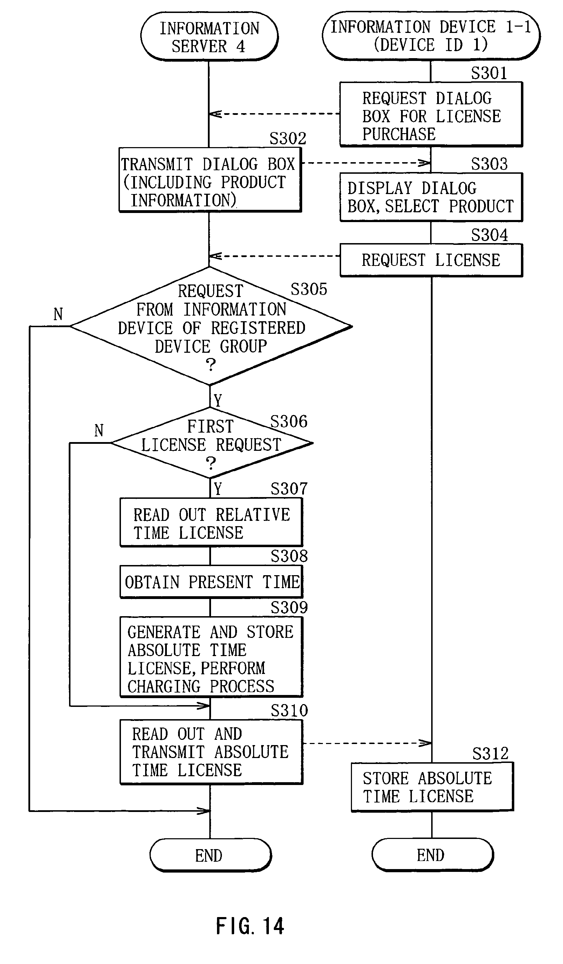

Although the present invention is described referring to the embodiment, the invention is not specifically limited to the embodiment, and can be variously modified. For example, in the above-described embodiment, the number of times where the same license is provided to each device group is controlled, and the number of times where the license is provided is limited; however, the number of times where the license is provided may not be limited. In this case, for example, as shown in FIG. 14, the step S313 (refer to FIG. 13) may be removed.

Moreover, the maximum number (acceptable number) of times the license is provided may be predetermined; however, for example, the maximum number of times the license is provided may be changed depending upon the number of information devices registered in a device group. More specifically, for example, it can be considered that the license can be provided four times for a device group including two information devices, and the license can be provided six times for a device group including three information devices. In this case, it is convenient specifically for a user who has a large number of information devices.

Further, in the above embodiment, it is forbidden to provide the license for the same contents to the same information device; however, the license for the same contents may be provided to the same information device. In this case, the number of times where the same license is provided to each information device may be controlled, and the number of times where the license is provided may be limited.

In the above embodiment, the transmission time is considered when the relative time license is converted into the absolute time license; however, the transmission time is not necessarily considered. Alternatively, time conversion may be performed with consideration to any other factors, and the conversion method is not limited to the method in the above description.

Moreover, in the above embodiment, various registration processes and the like are performed by one information server 4; however, the contents providing process, the license providing process, the service registration process and the charging process may be performed by different (physically and mechanically separated) servers.

Further, in the above embodiment, the information device is described as a device which performs various registration procedures or a download process on line with the information server; however, the invention is not limited to this, and the information device may perform the registration procedures off line. In this case, for example, contents, a license and a program for various registration procedures are stored in a portable WORM recording medium such as a CD-R, and a provider distributes the recording medium to the user, and the user installs and executes the program in his information device so that the user can perform various registration procedures and can obtain the contents and the license. Therefore, the invention is applicable to the user who has an information device in an environment where the information device cannot be connected to communications lines such as the Internet.

Moreover, in the above embodiment, it is described that one user can register one group; however, one user may be able to register a plurality of device groups. One user means, but is not limited to, one individual in general, and as long as a licenser permits, for example, one family making livelihood together or one social organization may be one user. Further, the interior of the user may be hierarchized and controlled. For example, it is applied to the case where one company is considered as one user, and a plurality of departments in the company is considered as a sub-user. In this case, according to the kinds or the contents, properties or distribution modes of the contents and license, various management conditions and utilization conditions are assumed and it is considered profitable.

Further, as the information device, various devices are included. The invention is applicable to, for example, a dedicated device such as electronic book device or an electronic dictionary, a general-purpose computer such as a personal computer, and a general-purpose PD device such as a cellular phone. In addition to the above devices, examples of the dedicated device include an audio reproduction device such as a CD player, a MD (trademark) player or an IC player, a video reproduction device typified by a DVD player, a television with a HD, a game machine and the like.

As described above, in the invention, a relative time license is stored in advance, and when the information server transmits a license to an information device for the first time, an absolute time license is generated on the basis of the relative time license and the present time, and the absolute time license is transmitted to the information device, so when the information server transmits the license of contents defined as a relative time license to the information device a plurality of times, a period during which the information device can utilize the contents can be always fixed. In other words, even in the case where a license is repeatedly downloaded, irrespective of the time of downloading, the expiration date of the contents can be fixed. Therefore, a way of utilizing contents through illegally extending the expiration date by a user can be eliminated, and a disadvantage of a contents·license provider can be prevented.

In particular, when the same license can be transmitted to any of a plurality of information devices belonging to one device group, in the case where a user has a plurality of information devices, the contents can be utilized in any of the plurality of information devices without extending the expiration date of the contents and charging to the user again.

Moreover, when a user can redownload the same license from the same information device owned by the user, for example, even in the case where the license is eliminated for any reason, the contents can be utilized without extending the expiration date of the contents and charging to the user again.

**Claims**

1. An information server having a function of providing an information device with a license which enables the utilization of encrypted contents distributed to the information device, the information server comprising:

   a license storage means for storing a relative time license including a contents utilization condition described with a relative time;
   a time obtaining means for obtaining the present time;
   a license generation means for generating an absolute time license which includes a contents utilization condition described with an absolute time on the basis of both of the relative time license stored in the license storage means and the present time obtained by the time obtaining means before the first transmission of a license to the information device; and
   a transmission means for transmitting the generated absolute time license to the information device.

2. An information server according to claim 1, further comprising:

   a group management means for associating a piece of grouped device identification information, a piece of key information for contents decryption, device identification information for identifying each information device in the device group and one or a plurality of kinds of license identification information assigned for the device group with a unique group identifier for the device group and registering them, the grouped device identification information used for grouping and identifying one or a plurality of information devices in a device group to which an information device intending to utilize contents belongs, and providing the one piece of grouped device identification information and the one piece of key information to an information device in the device group in response to a request from the information device in the device group; and
   a license providing means for judging an information device which requests a license on the basis of information controlled by the group management means in the case where the information device requests a license, and performing a process according to a judgment result.

3. An information server according to claim 2, wherein in the case where an information device which requests a license is an information device to which the same license has been provided before, the license providing means determines to refuse to provide the license to the information device, and

in the case where an information device which requests a license is another information device in a device group including an information device to which the license has been provided before, the license providing means determines to grant the license to the information device requesting the license.

4. An information server according to claim 2, wherein in the case where an information device requesting a license is an information device belonging to a device group controlled by the group management means, the license providing means determines to grant the license to the information device requesting the license irrespective of whether the license is requested for a second time or not.

5. An information server according to claim 1, wherein the group management means further controls the number of times where the same license is provided to each device group, and

the license providing means limits the number of times to a predetermined number.

6. An information server according to claim 2, wherein one device group is defined as a group including a plurality of information devices owned by one user.

7. An information server according to claim 1, wherein the license generation means generates the absolute time license with consideration to at least either a necessary time for transmitting a license to the information device or a time difference between the information device and the information server.

8. An information server according to claim 1, wherein the contents are text data, still image data, moving image data, audio data or data including a combination thereof.

9. An information device obtaining a license which enables the utilization of encrypted contents distributed to information devices, and utilizing the contents on the basis of the license, the information device comprising:

a license request means for requesting the information server to provide a license;
a receiving means for receiving an absolute time license transmitted from the information server in response to a first license request to the information server, the absolute time license including a contents utilization condition described with an absolute time; and
a replay means for replaying the contents on the basis of the received absolute time license.

10. An information device according to claim 9, wherein the license request means requests the information server to transmit a dialog box for license purchase, displays the transmitted dialog box, and transmits license specifying information for specifying a license selected in the displayed dialog box to the information server.

11. An information device according to claim 9, further comprising:

a first storage means for storing contents;
a second storage means for storing the received absolute time license; and
a third storage means for storing grouped device identification information and key information for contents decryption together with a group identifier provided to each device group, the grouped device identification information used for grouping and identifying one or a plurality of information devices which intend to utilize the contents, the key information commonly provided to each device group,
wherein the replay means performs a process of decrypting the contents stored in the first storage means on the basis of the information stored in the second storage means and the third storage means to replay the content.

12. An information device according to claim 9, wherein one device group is defined as a group including a plurality of information devices owned by one user.

13. An information device according to claim 9, wherein the contents are text data, still image data, moving image data, audio data or data including a combination thereof.

14. An information processing system comprising:

an information server having a function of providing an information device with a license which enables the utilization of encrypted and distributed contents; and
an information device as a client receiving a service from the information server through communications lines,

wherein the information server includes:

a license storage means for storing a relative time license including a contents utilization condition described with a relative time;
a time obtaining means for obtaining the present time;
a license generation means for generating an absolute time license including a contents utilization condition described with an absolute time on the basis of both of the relative time license stored in the license storage means and the present time obtained by the time obtaining means before the first transmission of a license to the information device; and

a transmission means for transmitting the generated absolute time license to the information device, and

the information device includes:

> a license request means for requesting the information server to provide a license;
>
> a receiving means for receiving an absolute time license transmitted from the information server in response to a first license request to the information server; and
>
> a replay means for replaying the contents on the basis of the received absolute time license.

15. An information processing method applied to an information processing system including an information server having a function of providing a license which enables the utilization of encrypted and distributed contents, and an information device as a client receiving a service from the information server through communications lines,

wherein in the information server,

an absolute time license including a contents utilization condition described with an absolute time is generated on the basis of both of a relative time license including a contents utilization condition described with a relative time and the present time before the first transmission of a license to the information device, and

the generated absolute time license is transmitted to the information device, and

in the information device,

a request to provide a license is made to the information server,

the absolute time license transmitted from the information server in response to a first license request to the information server is received, and

the contents are replayed on the basis of the received absolute time license.

16. An information processing program applied to an information server having a function of providing an information device with a license which enables the utilization of encrypted contents distributed to the information device, the information processing program enabling the information server to execute the steps of:

> storing a relative time license including a contents utilization condition described with a relative time;
>
> obtaining the present time;

generating an absolute time license including a contents utilization condition described with an absolute time on the basis of both of the stored relative time license and the obtained present time before the first transmission of a license to the information device; and

transmitting the generated absolute time license to the information device.

17. An information processing program applied to an information device obtaining a license which enables the utilization of encrypted contents distributed to information devices, and utilizing the contents on the basis of the license, the program enabling the information device to execute the steps of:

> requesting the information server to provide a license;
>
> receiving an absolute time license transmitted from the information server in response to a first license request to the information server, the absolute time license including a contents utilization condition described with an absolute time; and
>
> replaying the contents on the basis of the received absolute time license.

1G

1-1
INFORMATION DEVICE

1-2
INFORMATION DEVICE

2

4
INFORMATION SERVER

1-3
INFORMATION DEVICE

1-4
INFORMATION DEVICE

**FIG. 1**

| 20 | 21 | 22 | 23 | 24 | 25 |
|---|---|---|---|---|---|
| TIMER | CPU | ROM | RAM | ENCRYPTION /DECRYPTION PORTION | CODEC PORTION |

31

INPUT/OUTPUT INTERFACE — 32

30

| INPUT PORTION | OUTPUT PORTION | STORAGE PORTION | COMMUNICATION PORTION | DRIVE |
|---|---|---|---|---|
| 26 | 27 | 28 | 29 | |

41 42 43 44

**FIG. 2**

~50

CONTROL FUNCTION BLOCK ——— COMMUNICATION FUNCTION BLOCK ~70

~80

| CONTROL FUNCTION BLOCK | | STORAGE FUNCTION BLOCK |
|---|---|---|

REPLAY FUNCTION ~51

GROUP REGISTRATION REQUEST FUNCTION ~52

DEVICE REGISTRATION REQUEST FUNCTION ~53

SERVICE REGISTRATION REQUEST FUNCTION ~54

DEVICE ID GENERATION FUNCTION ~56

CONTENTS·LICENSE REQUEST FUNCTION ~57

FIRST STORAGE PORTION ~81

SECOND STORAGE PORTION ~82

THIRD STORAGE PORTION ~83

FOURTH STORAGE PORTION ~84

FIG. 3

~90

CONTROL FUNCTION BLOCK ——— COMMUNICATION FUNCTION BLOCK ~100

~110

GROUP REGISTRATION PROCESSING FUNCTION ~91

DEVICE REGISTRATION MANAGEMENT FUNCTION ~92

SERVICE REGISTRATION PROCESSING FUNCTION ~93

CONTENTS·LICENSE PROVIDING FUNCTION
(TIME OBTAINING, LICENSE GENERATION DETERMINATION) ~94

CHARGING FUNCTION ~95

STORAGE FUNCTION BLOCK

CONTENTS STORAGE PORTION ~111

LICENSE TABLE ~112

GROUP MANAGEMENT TABLE ~113

FIG. 4

|  | 127 | 128 | 129 | 112 |
| --- | --- | --- | --- | --- |
| | LICENSE ID | RELATIVE TIME LICENSE | GROUP ID OF LICENSED GROUP | |
| | $L_0$ | AAA. xml | $G_0$, $G_1$, $G_2$ | |
| | $L_1$ | BBB. xml | $G_0$ | |
| | $L_2$ | CCC. xml | $G_2$ | |
| | $L_3$ | DDD. xml | $G_3$ | |
| | $L_4$ | EEE. xml | $G_2$ | |
| | ⋮ | ⋮ | ⋮ | |

FIG. 5

EP 1 638 005 A1

113

| GROUP ID | PASSWORD | GROUP INFORMAITON | DEVICE ID | SERVICE DATA | | LICENSE ID | FIRST DOWNLOAD TIME | ABSOLUTE TIME LICENSE | DOWNLOAD NUMBER |
|---|---|---|---|---|---|---|---|---|---|
| | | | | LEAF ID | DNK | | | | |
| $G_0$ | ABCD | ○○○○ | $D_0$ | $LF_0$ | $DNK_0$ | $L_0$ | $t_0$ | aaa0.xml | 1 |
| | | | $D_1$ | | | | | | |
| | | | $D_2$ | | | $L_1$ | $t_1$ | bbb0.xml | 2 |
| $G_1$ | EFGH | △△△△ | $D_3$ | $LF_1$ | $DNK_1$ | $L_0$ | $t_2$ | aaa1.xml | 1 |
| | | | $D_4$ | | | | | | |
| $G_2$ | IJKL | ×××× | $D_5$ | $LF_2$ | $DNK_2$ | $L_0$ | $t_3$ | aaa2.xml | 2 |
| | | | $D_6$ | | | $L_2$ | $t_4$ | ccc2.xml | 3 |
| | | | $D_7$ | | | | | | |
| | | | $D_8$ | | | $L_4$ | $t_5$ | eee2.xml | 1 |
| ⋮ | ⋮ | ⋮ | ⋮ | ⋮ | ⋮ | ⋮ | ⋮ | ⋮ | ⋮ |

FIG. 6

140

150

| LICENSE ID | ~141 |
| GENERATED DATE | ~142 |
| EXPIRATION DATE (ABSOLUTE TIME) | ~143 |
| UTILIZATION CONDITION | ~144 |
| LEAF ID | ~145 |
| ELECTRONIC SIGNATURE | ~146 |

| DEVICE ID 1 | ~151 |
| GROUP ID | ~152 |
| PASSWORD | ~153 |
| TID 1 | ~154 |
| LEAF ID | ~155 |
| DNK | ~156 |

130

| CONTENTS ID | DIGITAL RIGHT MANAGEMENT (DRM) | LICENSE ID | ENABLING KEY BLOCK EKB | ENCRYPTED CONTENTS KEY Enc (KR, KC) | ENCRYPTED CONTENTS Enc (KC, CONTENTS) |
| 131 | 132 | 133 | 134 | KR — 135 | 136 |

KC

CONTENTS

FIG. 7

FIG. 8

HIERARCHICAL TREE STRUCTURE H

[LEAF KEY]

[DNK]

[LEAF ID]

[DEVICE GROUP]

[DEVICE]

KR

K0 · K1

K00 · K01 · K10 · K11

K000 · K001 · K010 · K011 · K100 · K101 · K110 · K111

DNK0 · DNK1 · DNK2 · ... · DNK7

LF0 · LF1 · LF2 · ... · LF7

0 · 1 · 2 · ... · 7

0 1 2 · 3 4 · 5 6 7 8 · N-2 N-1 N

FIG. 9A  EKB=

| |
|---|
| Enc (K0, KR) |
| Enc (K1, KR) |

FIG. 9B  DNK0=

| |
|---|
| Enc (K00, K0) |
| Enc (K000, K00) |
| K000 |

FIG. 9C  DNK1=

| |
|---|
| Enc (K00, K0) |
| Enc (K001, K00) |
| K001 |

FIG. 9D  DNK2=

| |
|---|
| Enc (K01, K0) |
| Enc (K010, K01) |
| K010 |

DEVICE GROUP 1G

| INFORMATION SERVER 4 | | INFORMATION DEVICE 1-1 (DEVICE ID 1) | INFORMATION DEVICE 1-2 (DEVICE ID 2) |

REQUEST GROUP
REGISTRATION
(GROUP INFORMATION)   S201

COMPLETE GROUP
REGISTRATION
(GROUP ID, PASSWORD)   S202

| GROUP ID | PASS-WORD | GROUP INFOR-MATION |

REQUEST DEVICE
REGISTRATION
(GROUP ID, PASSWORD,
DEVICE ID 1)   S203

COMPLETE DEVICE
REGISTRATION(TID 1)   S204

| GROUP ID | PASS-WORD | GROUP INFOR-MATION | DEVICE ID 1 | TID 1 |

NOTIFY TO PERFORM
SERVICE REGISTRATION   S205

113

REQUEST SERVICE
REGISTRATION(TID 1)   S206

COMPLETE SERVICE
REGISTRATION
(SERVICE DATA)   S207

| GROUP ID | PASS-WORD | GROUP INFOR-MATION | DEVICE ID 1 | TID 1 | SERVICE DATA (LEAF ID, DNK) |

DEVICE ID 1

| DEVICE ID 1 |
| GROUP ID |
| PASSWORD |

| DEVICE ID 1 |
| GROUP ID |
| PASSWORD |
| TID 1 |

150

| DEVICE ID 1 |
| GROUP ID |
| PASSWORD |
| TID 1 |
| LEAF ID, DNK |

FIG. 10

FIG. 11

EP 1 638 005 A1

EP 1 638 005 A1

INFORMATION
SERVER 4

INFORMATION
DEVICE 1-1
(DEVICE ID 1)

S215
REQUEST CONTENT

(CONTENTS FILE)    S216

CONTENTS
FILE    130

112

| LICENSE ID | RELATIVE TIME LICENSE | GROUP ID OF LICENSED GROUP |
|---|---|---|

REQUEST LICENSE
(LEAF ID)    S217

(LICENSE SPECIFYING INFORMATION)

113

(ABSOLUTE TIME LICENSE) S218

140

| GROUP ID | DEVICE ID1 DEVICE ID2 DEVICE ID3 | LICENSE ID | FIRST DOWNLOAD TIME | ABSOLUTE TIME LICENSE | DOWN-LOAD NUMBER |
|---|---|---|---|---|---|

LICENSE

FIG. 12

INFORMATION
SERVER 4

INFORMATION DEVICE 1-1
(DEVICE ID 1)

S301
REQUEST DIALOG
BOX FOR LICENSE
PURCHASE

S302
TRANSMIT DIALOG BOX
(INCLUDING PRODUCT
INFORMATION)

S303
DISPLAY DIALOG
BOX, SELECT PRODUCT

S304
REQUEST LICENSE

S305
REQUEST
FROM INFORMATION
DEVICE OF REGISTERED
DEVICE GROUP
?
N

Y

S306
FIRST
LICENSE REQUEST
?
N

Y

S313
WITHIN
ACCEPTABLE
NUMBER
?
N

Y

S307
READ OUT RELATIVE
TIME LICENSE

S308
OBTAIN PRESENT TIME

S309
GENERATE AND STORE
ABSOLUTE TIME
LICENSE, PERFORM
CHARGING PROCESS

S314
REQUEST
FROM SAME
INFORMATION
DEVICE
?
N

Y

S310
READ OUT AND
TRANSMIT ABSOLUTE
TIME LICENSE

S312
STORE ABSOLUTE
TIME LICENSE

S311
INCREMENT NUMBER

S315
TRANSMIT ERROR
MESSAGE

END

END

FIG. 13

31

INFORMATION
SERVER 4

INFORMATION DEVICE 1-1
(DEVICE ID 1)

S301
REQUEST DIALOG
BOX FOR LICENSE
PURCHASE

S302
TRANSMIT DIALOG BOX
(INCLUDING PRODUCT
INFORMATION)

S303
DISPLAY DIALOG
BOX, SELECT PRODUCT

S304
REQUEST LICENSE

S305
REQUEST
FROM INFORMATION
DEVICE OF REGISTERED
DEVICE GROUP
?
N

Y

S306
FIRST
LICENSE REQUEST
?
N

Y S307
READ OUT RELATIVE
TIME LICENSE

S308
OBTAIN PRESENT TIME

S309
GENERATE AND STORE
ABSOLUTE TIME
LICENSE, PERFORM
CHARGING PROCESS

S310
READ OUT AND
TRANSMIT ABSOLUTE
TIME LICENSE

S312
STORE ABSOLUTE
TIME LICENSE

END

END

FIG. 14

<div align="center">**INTERNATIONAL SEARCH REPORT**</div>

| International application No. |
|---|
| PCT/JP2004/008179 |

| A. CLASSIFICATION OF SUBJECT MATTER |
|---|
| Int.Cl$^7$ G06F12/14, 15/00, 17/60, H04L9/08 |
| According to International Patent Classification (IPC) or to both national classification and IPC |

| B. FIELDS SEARCHED |
|---|
| Minimum documentation searched (classification system followed by classification symbols) |
| Int.Cl$^7$ G06F12/14, 15/00, 17/60, H04L9/08, G07C1/00-15/00 |

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2004 |
| Kokai Jitsuyo Shinan Koho | 1971-2004 | Toroku Jitsuyo Shinan Koho | 1994-2004 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y | JP 2003-173381 A (Matsushita Electric Industrial Co., Ltd.), 20 June, 2003 (20.06.03), Par. Nos. [0023], [0032], [0047] to [0070], [0077] to [0103]; Figs. 2, 4, 6, 7, 11 to 16 & WO 2002/097693 A2 & US 2002/0184515 A1 | 1-17 |
| Y | JP 2003-76805 A (International Business Machines Corp.), 14 March, 2003 (14.03.03), Par. No. [0043]; Fig. 7 (Family: none) | 1-17 |
| A | JP 2002-84271 A (Sony Corp.), 22 March, 2002 (22.03.02), Full text; all drawings & EP 1187391 A2 & US 2002/0085722 A1 | 1-17 |

| ☒ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 August, 2004 (20.08.04) | 07 September, 2004 (07.09.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2004/008179 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2002-108710 A  (Sony Corp.),<br>12 April, 2002 (12.04.02),<br>Full text; all drawings<br>& EP 1176754 A2          & CN 1338698 A<br>& US 2002/0116622 A1 | 1-17 |
| A | JP 2002-91850 A  (Tekku Famu Kabushiki Kaisha),<br>29 March, 2002 (29.03.02),<br>Full text; all drawings<br>(Family: none) | 1-17 |

Form PCT/ISA/210 (continuation of second sheet) (January 2004)